(19) Europäisches Patentamt
European Patent Office
Office européen des brevets

(11) **EP 4 765 692 A1**

(12) **EUROPEAN PATENT APPLICATION**
published in accordance with Art. 153(4) EPC

(43) Date of publication:
**24.06.2026 Bulletin 2026/26**

(21) Application number: **23949333.1**

(22) Date of filing: **18.08.2023**

(51) International Patent Classification (IPC):
**H04L 1/00** (2006.01)

(52) Cooperative Patent Classification (CPC):
**H04L 1/00**

(86) International application number:
**PCT/CN2023/113901**

(87) International publication number:
**WO 2025/039139 (27.02.2025 Gazette 2025/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **LIU, Wendong
Dongguan, Guangdong 523860 (CN)**

(74) Representative: **RGTH
Patentanwälte PartGmbB
Mönckebergstraße 11
20095 Hamburg (DE)**

(54) **CHANNEL INFORMATION PROCESSING METHOD, FIRST TERMINAL DEVICE AND FIRST NETWORK DEVICE**

(57) The present application relates to a channel information processing method, a first terminal device, a first network device, a chip, a computer readable storage medium, a computer program product, a computer program and a communication system. The channel information processing method comprises: a first terminal device receives a first sample data set sent by a first network device, wherein the first sample data set comprises first channel information; and the first terminal device processes the first channel information on the basis of a first encoder to obtain first encoding information, wherein the first encoding information is used for processing related to a transmission parameter set to obtain second encoding information, the second encoding information is processed by a first decoder to obtain second channel information, and the second channel information is used for updating the first encoder and/or the first decoder. According to embodiments of the present application, the performance of the first encoder and/or the first decoder under non-ideal transmission can be optimized, so that the CSI feedback performance is improved.

```
┌─────────────────────────────────────────────────────────────┐
│ A first terminal device receives a first sample data set      │  ⌐ S710
│ transmitted by a first network device                         │
└─────────────────────────────────────────────────────────────┘
                            │
                            ▼
┌─────────────────────────────────────────────────────────────┐
│ The first terminal device processes the first channel         │  ⌐ S720
│ information based on a first encoder, to obtain first encoded  │
│ information                                                     │
└─────────────────────────────────────────────────────────────┘
```

**FIG. 7**

## Description

TECHNICAL FIELD

The present disclosure relates to the field of communications, and more particular, to a channel information processing method, a first terminal device, a first network device, a chip, a computer-readable storage medium, a computer program product, a computer program, and a communication system.

BACKGROUND

In view of a great success of artificial intelligence (AI) technology, especially deep learning, in computer vision, natural language processing, or other fields, the communications field has begun to try to use AI (such as deep learning) to solve technical challenges that are difficult to be solved with traditional communication methods. In a channel state information (CSI) feedback scheme based on deep learning autoencoders, compression and feedback are performed on channel information by using an encoder on a terminal side, and compressed information is reconstructed into channel information by using a decoder on a network side, ensuring restoration of the channel information, while providing the possibility of reducing feedback overhead. It is necessary to consider how to optimize performance of the encoder and decoder, to improve CSI feedback performance.

SUMMARY

Embodiments of the present disclosure provide a channel information processing method, which may improve the CSI feedback performance.

The embodiments of the present disclosure provide a channel information processing method, which includes:

> receiving, by a first terminal device, a first sample data set transmitted by a first network device; where the first sample data set includes first channel information; and
> processing, by the first terminal device, the first channel information based on a first encoder, to obtain first encoded information; where the first encoded information is used for performing processing related to a transmission parameter set to obtain second encoded information, the second encoded information is used for obtaining second channel information through processing by a first decoder, and the second channel information is used for updating the first encoder and/or the first decoder.

The embodiments of the present disclosure provide a channel information processing method, which includes:

processing, by a first network device, second encoded information based on a first decoder, to obtain second channel information; where the second encoded information is obtained by performing processing related to a transmission parameter set on first encoded information, and the first encoded information is obtained by processing first channel information based on a first encoder; and

updating, by the first network device, the first encoder and/or the first decoder based on the second channel information.

The embodiments of the present disclosure provide a first terminal device, which includes:

> a first communication module, configured to receive a first sample data set transmitted by a first network device; where the first sample data set includes first channel information; and
> a first processing module, configured to process the first channel information based on a first encoder, to obtain first encoded information; where the first encoded information is used for performing processing related to a transmission parameter set to obtain second encoded information, the second encoded information is used for obtaining second channel information through processing by a first decoder, and the second channel information is used for updating the first encoder and/or the first decoder.

The embodiments of the present disclosure provide a first network device, which includes:

> a second processing module, configured to process second encoded information based on a first decoder, to obtain second channel information; where the second encoded information is obtained by performing processing related to a transmission parameter set on first encoded information, and the first encoded information is obtained by processing first channel information based on a first encoder;
> where the second processing module is further configured to update the first encoder and/or the first decoder based on the second channel information.

The embodiments of the present disclosure provide a first terminal device, which includes: a transceiver, a processor, and a memory. The memory is configured to store a computer program, the transceiver is configured to communicate with other devices, and the processor is configured to call the computer program stored in the memory and execute the computer program, to enable the first terminal device to perform the above channel information processing method.

The embodiments of the present disclosure provide a first network device, which includes: a transceiver, a processor, and a memory. The memory is configured to store a computer program, the transceiver is configured to communicate with other devices, and the processor is configured to call the computer program stored in the memory and execute the computer program, to enable the first network device to perform the above channel information processing method.

The embodiments of the present disclosure provide a chip, which is configured to implement the above channel information processing method.

Specifically, the chip includes: a processor, configured to call a computer program from a memory and execute the computer program, to enable a device equipped with the chip to perform the above channel information processing methods.

The embodiments of the present disclosure provide a computer-readable storage medium, which is configured to store a computer program, where the computer program, when executed by a device, enables the device to perform the above channel information processing methods.

The embodiments of the present disclosure provide a computer program product, which includes computer program instructions, where the computer program instructions enable a computer to perform the above channel information processing methods.

The embodiments of the present disclosure provide a computer program, where the computer program, when executed on a computer, enables the computer to perform the above channel information processing methods.

The embodiments of the present disclosure provide a communication system, which includes a first terminal device and a first network device, configured to perform the above methods.

In the embodiments of the present disclosure, in a process of updating a first encoder and/or a first decoder used for performing channel information feedback, processing of encoded information based on a transmission parameter set is introduced in forward propagation, so that the update on the first encoder and/or the first decoder takes into account the impact of the transmission parameter set in a non-ideal transmission processing, which may optimize performance of the first encoder and/or the first decoder under non-ideal transmission, thereby improving the CSI feedback performance.

BRIEF DESCRIPTION OF THE DRAWINGS

FIG. 1 is a schematic diagram of an application scenario according to embodiments of the present disclosure.
FIG. 2 is a schematic diagram of a structure of a neuron node.
FIG. 3 is a schematic diagram of a simple neural network.
FIG. 4 is a schematic diagram of a convolutional neural network.

FIG. 5 is a schematic diagram of a structure of a basic long short-term memory (LSTM) unit.
FIG. 6 is a schematic diagram of an AI-based CSI autoencoder framework.
FIG. 7 is a schematic flowchart of a channel information processing method according to an embodiment of the present disclosure.
FIG. 8 is a schematic diagram of a signal processing process in an implementation of a first encoder in the embodiments of the present disclosure.
FIG. 9 is a schematic diagram of a signal processing process in another implementation of a first encoder in the embodiments of the present disclosure.
FIG. 10 is a schematic diagram of a signal processing process in yet another implementation of a first encoder in the embodiments of the present disclosure.
FIG. 11 is a schematic flowchart of a channel information processing method according to another embodiment of the present disclosure.
FIG. 12 is a schematic diagram of a joint training scheme based on gradient propagation.
FIG. 13 is a first schematic diagram of a separate training scheme based on data set transmission.
FIG. 14 is a second schematic diagram of a separate training scheme based on data set transmission.
FIG. 15 is a schematic block diagram of a first terminal device according to an embodiment of the present disclosure.
FIG. 16 is a schematic block diagram of a first network device according to an embodiment of the present disclosure.
FIG. 17 is a schematic block diagram of a first network device according to another embodiment of the present disclosure.
FIG. 18 is a schematic block diagram of a first network device according to yet another embodiment of the present disclosure.
FIG. 19 is a schematic block diagram of a first network device according to still yet another embodiment of the present disclosure.
FIG. 20 is a schematic block diagram of a communication device according to the embodiments of the present disclosure.
FIG. 21 is a schematic block diagram of a chip according to the embodiments of the present disclosure.
FIG. 22 is a schematic block diagram of a communication system according to the embodiments of the present disclosure.

DETAILED DESCRIPTION

Technical solutions in the embodiments of the present disclosure will be described below with reference to the accompanying drawings in the embodiments of the present disclosure.

The technical solutions in the embodiments of the present disclosure may be applied to various communication systems, such as a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial communication network (non-terrestrial networks, NTN) system, a universal mobile telecommunications system (UMTS), a wireless local area network (WLAN), wireless fidelity (WiFi), a 5th-generation (5G) communication system and other communication systems.

Generally speaking, traditional communication systems support a limited number of connections, which is easy to be implemented. However, with the development of the communication technology, mobile communication systems will not only support traditional communications, but also support, for example, device to device (D2D) communication, machine to machine (M2M) communication, machine type communication (MTC), vehicle to vehicle (V2V) communication, or vehicle to everything (V2X) communication. The embodiments of the present disclosure may be applied to these communication systems as well.

In an implementation, the communication system in the embodiments of the present disclosure may be applied to a carrier aggregation (CA) scenario, and a dual connectivity (DC) scenario, and may also be applied to a standalone (SA) network deployment scenario.

In an implementation, the communication system in the embodiments of the present disclosure may be applied to an unlicensed spectrum, where the unlicensed spectrum may also be considered as a shared spectrum. Alternatively, the communication system in the embodiments of the present disclosure may be applied to a licensed spectrum, where the licensed spectrum may be considered as an unshared spectrum.

In the embodiments of the present disclosure, various embodiments are described in conjunction with a network device and a terminal device. The terminal device may be referred to as a user equipment (UE), an access terminal, a user unit, a user station, a mobile station, a mobile platform, a remote station, a remote terminal, a mobile device, a user terminal, a terminal, a wireless communication device, a user agent, a user apparatus, or the like.

The terminal device may be a station (ST) in the WLAN, which may be a cellular phone, a cordless phone, a session initiation protocol (SIP) phone, a wireless local loop (WLL) station, a personal digital assistant (PDA) device, a handheld device with a wireless communication function, a computing device or other processing devices connected to a wireless modem, an in-vehicle device, a wearable device, a terminal device in a next generation communication system (e.g., an NR network), a terminal device in a future evolved public land mobile network (PLMN) network, or the like.

In the embodiments of the present disclosure, the terminal device may be deployed on land, including indoor or outdoor, handheld, wearable, or in-vehicle; the terminal device may also be deployed on water (e.g., on a steamship); and the terminal device may also be deployed in air (e.g., on an airplane, on a balloon, or on a satellite).

In the embodiments of the present disclosure, the terminal device may be a mobile phone, a pad, a computer with a wireless transceiver function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, or the like.

As an example but not a limitation, in the embodiments of the present disclosure, the terminal device may be a wearable device. The wearable device may be referred to as a wearable smart device, which is a general term for wearable devices developed by performing the intellectualized design on daily wear by applying wearable technologies, such as glasses, gloves, watches, clothing and shoes. The wearable device is a portable device that is worn directly on a body, or integrated into clothes or accessories of users. The wearable device not only is a hardware device, but also implements powerful functions by software support as well as data interaction or cloud interaction. Generalized wearable smart devices include devices that are fully functional, large in size, and capable of implementing full or partial functions without relying on smart phones, such as smart watches or smart glasses, as well as devices that only focus on a certain type of application function and need to be used in conjunction with other devices (e.g., a smart phone), such as various smart bracelets and smart jewelry that monitor physical signs.

In the embodiments of the present disclosure, the network device may be a device used for communicating with a mobile device. The network device may be an access point (AP) in WLAN, which may be an evolutional base station (Evolutional Node B, eNB or eNodeB for short) in LTE, a relay station or an access point, an in-vehicle device, a wearable device, a network device (next Generation Node B, gNB for short) in an NR network, a network device in a future evolved PLMN network, a network device in an NTN network, or the like.

As an example but not a limitation, in the embodiments of the present disclosure, the network device may have mobile characteristics. For example, the network device may be a device which is mobile. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may be a base station deployed on land, water, or other places.

In the embodiments of the present disclosure, the network device may provide services for a cell, and the terminal device communicates with the network device through a transmission resource (e.g., a frequency-domain resource or a spectrum resource) used by the cell. The cell may be a cell corresponding to the network device (e.g., a base station), and the cell may belong to a macro base station, or may belong to a base station corresponding to a small cell. The small cell here may include: a metro cell, a micro cell, a pico cell, a femto cell, or the like. These small cells have characteristics of small coverage ranges and low transmission power, which are applicable for providing a data transmission service with high speed.

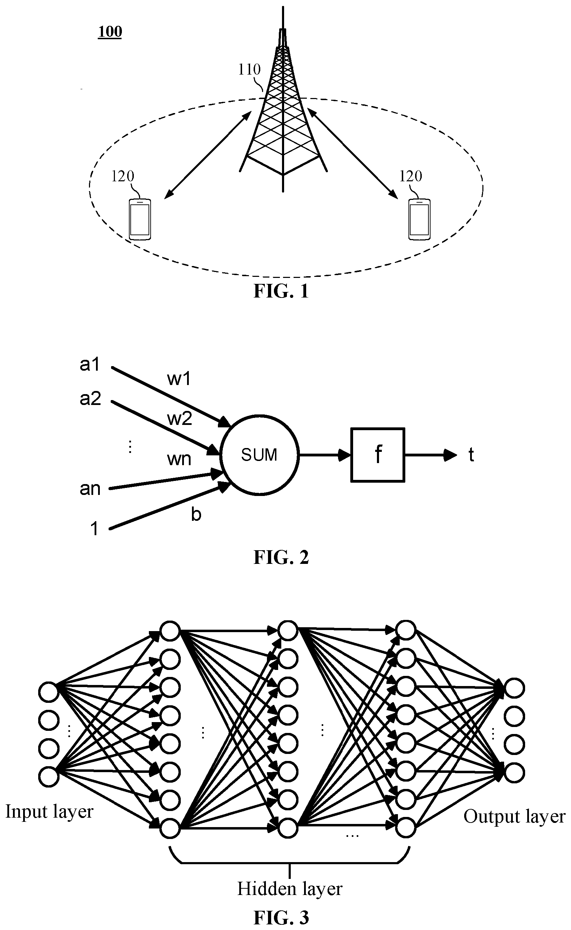

FIG. 1 exemplarily illustrates a communication system 100. The communication system includes one network device 110 and two terminal devices 120. In an implementation, the communication system 100 may include a plurality of network devices 110, and there are other number of terminal devices 120 in the coverage range of each network device 110, which is not limited in the embodiments of the present disclosure.

It should be understood that, in the embodiments of the present disclosure, a device with a communication function in the network/system may be referred to as a communication device. Considering the communication system illustrated in FIG. 1 as an example, the communication device may include a network device and a terminal device that have a communication function. The network device and the terminal device may be the specific devices in the embodiments of the present disclosure, which will not be repeated here. The communication device may further include other devices in the communication system, such as a network controller, a mobility management entity, and other network entities, which are not limited in the embodiments of the present disclosure.

It should be understood that the terms "system" and "network" are often used interchangeably herein. The term "and/or" herein is only an association relationship for describing associated objects, indicating that there may be three kinds of relationships. For example, "A and/or B" may represent the following three cases where: A exists alone, both A and B exist, and B exists alone. In addition, a character "/" herein generally indicates that the associated objects before and after this character are in an "or" relationship.

It should be understood that, "indicate" mentioned in the embodiments of the present disclosure may mean a direct indication, an indirect indication, or may mean that there is an association relationship. For example, A indicating B may mean that A directly indicates B, and for example, B may be acquired by A; alternatively, A indicating B may mean that A indirectly indicates B, and for example, A indicates C, and B may be acquired by C; alternatively, A indicating B may mean that there is an association relationship between A and B.

In the description of the embodiments of the present disclosure, the term "correspond" may mean that there is a direct correspondence or an indirect correspondence between the two, or may mean that there is an association relationship between the two, or may mean a relationship of indicating and being indicated, or a relationship of configuring and being configured, or the like.

To facilitate understanding of the technical solutions of the embodiments of the present disclosure, the relevant technologies of the embodiments of the present disclosure are described below. The following relevant technologies, as optional solutions, may be arbitrarily combined with the technical solutions of the embodiments of the present disclosure, and those combined solutions all belong to the protection scope of the embodiments of the present disclosure.

(1) Neural networks and machine learning

A neural network is a computational model consisting of a plurality of interconnected neuron nodes. FIG. 2 is a schematic diagram of a structure of a neuron node. The connection between a node and another node represents a weighting value from an input signal to an output signal, which is referred to as a weighting factor (e.g., $w_1$, $w_2$, $w_n$, etc.). Each node performs a weighted summation on different input signals (e.g., $a_1$, $a_2$, $a_n$, etc.) (optionally, further summing with bias information b) and outputs the result through a specific activation function f.

FIG. 3 is a schematic diagram of a simple neural network. As illustrated in FIG. 3, the neural network includes an input layer, hidden layers and an output layer. Different outputs may be generated by using different connection manners of a plurality of neurons, as well as different weighting factors and activation functions, thereby fitting a mapping relationship from input to output. Each node in a current layer is connected to all of nodes in the next layer of the node in the current layer. This fully connected model herein may also be referred to as a deep neural network (DNN).

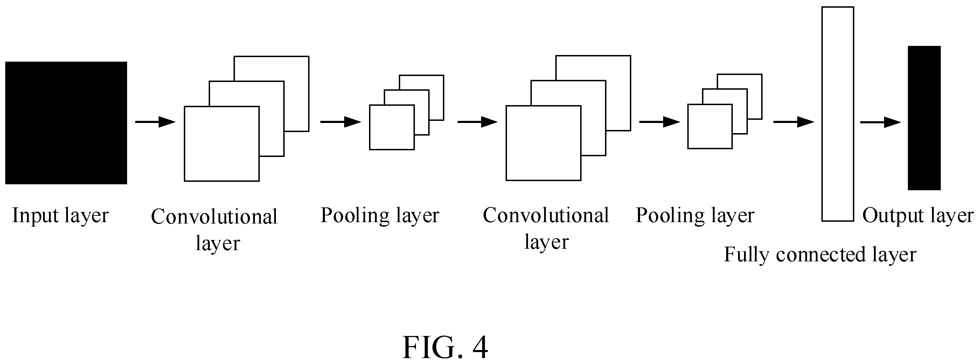

Then, a convolutional neural network (CNN) will be briefly introduced. FIG. 4 is a schematic diagram of the CNN. A basic structure of the CNN includes: an input layer, a plurality of convolutional layers, a plurality of pooling layers, a fully connected layer and an output layer. Each neuron of a convolution kernel in the convolutional layer is locally connected to an input of the neuron, and the local maximum or average features of a certain layer are extracted by introducing the pooling layer, which effectively reduces network parameters and mines local features, enabling the CNN to converge quickly and achieve excellent performance.

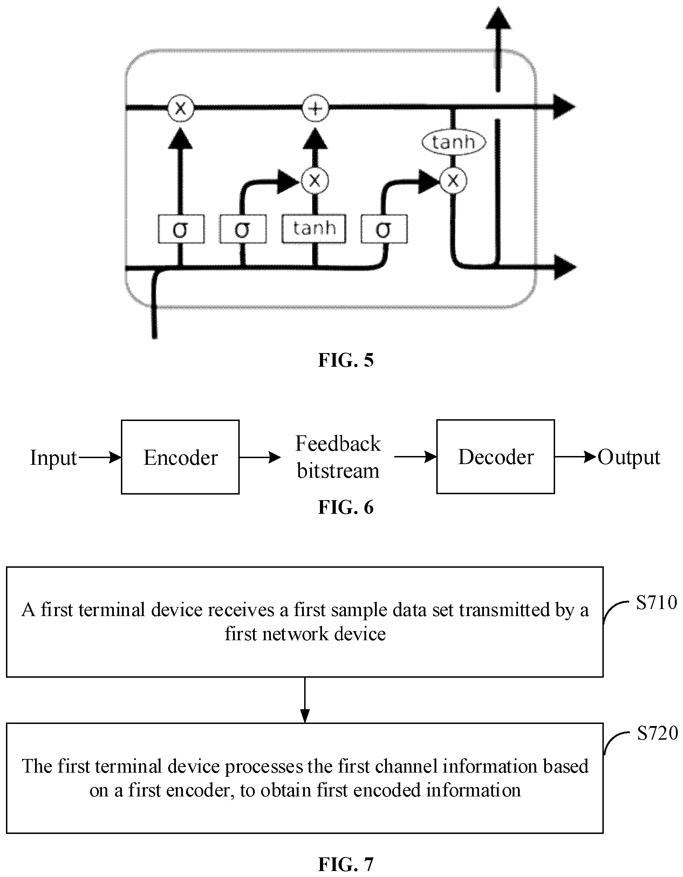

Finally, a recurrent neural network (RNN) will be briefly introduced. The RNN is a neural network that models sequential data and has achieved remarkable results in the field of natural language processing, such as machine translation and speech recognition. Specifically, the network memorizes information from the past and uses the information in calculation of the current output. That is, nodes between the hidden layers are no longer unconnected but connected, and the input of the hidden layer includes not only the input layer but also the output of the hidden layer at the previous moment. Commonly used RNNs include structures, such as a long short-term memory (LSTM) and a gated recurrent unit (GRU). FIG. 5 illustrates a structure of a basic LSTM unit. Unlike the RNN, which only considers the most recent state, a unit state of the LSTM determines which states should be left behind and which states should be forgotten, thus solving the defects of traditional RNN in long-term memory.

(2) Codebook-based CSI feedback scheme in NR

In the current NR system, for the CSI feedback scheme, codebook-based feature vector feedback is usually used to enable the base station to obtain downlink CSI. Specifically, a network transmits a downlink channel state information-reference signal (CSI-RS) to a user (i.e., a terminal), and the user uses the CSI-RS to estimate CSI of a downlink channel and performs feature value decomposition on the estimated downlink channel, to obtain a feature vector corresponding to the downlink channel.

Specifically, the NR provides two codebook design schemes: Type 1 (Type I) and Type 2 (Type II). The Type I codebook is used for CSI feedback with conventional accuracy and is mainly used for transmission in a single user-multiple input/multiple output (SU-MIMO) scenario. The Type II codebook is mainly used for improving transmission performance of multiple user-multiple input/multiple-output (MU-MIMO). For both Type I and Type II codebooks, two-level codebook feedback with $W = W_1 W_2$ is adopted, where $W_1$ describes the wideband, long-term characteristics of the channel and determines a set of L discrete fourier transform (DFT) beams; $W_2$ describes the subband and short-term characteristics of the channel. In particular, for the Type I codebook, the function of $W_2$ is to select one beam from L DFT beams; for the Type II codebook, the function of $W_2$ is to linearly combine the L DFT beams and provide feedback in a form of amplitude and phase. Generally, the Type II codebook utilizes a higher number of feedback bits to obtain higher accuracy CSI feedback performance.

In a CSI reporting process, the NR supports CSI to be reported through a physical uplink control channel (PUCCH) or a physical uplink shared channel (PUSCH), specifically including periodic reporting and semi-static reporting on the PUCCH, and aperiodic reporting and semi-static reporting on the PUSCH.

(3) AI-based CSI feedback scheme

In view of a great success of artificial intelligence (AI) technology, especially deep learning, in computer vision, natural language processing, or other fields, the communications field has begun to try to use deep learning (such as CSI feedback) to solve technical challenges that are difficult to be solved with traditional communication methods. A neural network architecture commonly used in deep learning is nonlinear and data-driven, which may perform feature extraction on actual channel matrix data and restore the channel matrix information compressed and fed back by the UE side as much as possible on the network side. While ensuring the restoration of channel information, the neural network architecture also provides the possibility of reducing the CSI feedback overhead on the UE side. The deep learning-based CSI feedback regards channel information as a picture to be compressed, uses a deep learning autoencoder to perform compression and feedback on the input channel information, and reconstructs the compressed channel picture at the transmitting end, which may retain the channel information to a greater extent.

The AI-based CSI feedback has attracted widespread attention, with a basic implementation framework as follows.

The AI-based CSI autoencoder is used for implementation. The entire feedback system is divided into encoder and decoder parts, which are respectively deployed at the user transmitting end and the network receiving end. After the user obtains channel information through channel estimation, the channel information is used as an input of an encoder. A channel information matrix is compressed and encoded through a neural network of the encoder, and a compressed bitstream is fed back to the network through an air interface feedback link. The network recovers the channel information based on the feedback bitstream through a decoder and outputs complete feedback channel information. FIG. 6 is a schematic diagram of an AI-based CSI autoencoder framework, in which the neural networks of the encoder and the decoder may adopt a DNN composed of multiple layers of fully connected layers, a CNN composed of multiple layers of convolutional layers, or an RNN with structures such as LSTM or GRU, or various neural network architectures such as residual and self-attention mechanisms may also be used for improving the performance of the encoder and the decoder.

The above CSI input and CSI output may both be full channel information, or feature vector information obtained based on the full channel information. Therefore, the current deep learning-based channel information feedback methods are mainly classified into full channel information feedback and feature vector feedback. Although the former is capable of realizing the compression and feedback of the full channel information, the feedback bitstream overhead is relatively high. Furthermore, this feedback method is not supported in existing NR systems. Whereas, the feature vector-based feedback method is a feedback architecture supported in the current NR systems, and the AI-based feature vector feedback method is capable of achieving higher CSI feedback accuracy with the same feedback bit overhead, or significantly reducing the feedback overhead while achieving the same CSI feedback accuracy.

Compared with the codebook-based CSI feedback method in the NR, the AI-based CSI feedback method may extract correlation of feature vectors in the time domain and frequency domain, and thus achieve better feedback performance with lower feedback overhead.

However, for the existing CSI reporting process, ideal feedback is usually assumed during both system-level and link-level performance evaluation. That is, whether it is the codebook-based CSI feedback or the AI-based CSI feedback, it is assumed that the CSI reporting process is error-free, and the network side may perfectly decode a bitstream carrying CSI information and recover the CSI information.

However, the ideal assumption of uplink CSI cannot be achieved in actual systems. In the NR system, the CSI is reported through the PUCCH or the PUSCH. For Type I codebook-based CSI feedback and Type II codebook-based CSI feedback, taking the PUSCH reporting as an example, original CSI information is converted into a bitstream after passing through the codebook, and undergoes channel coding along with data information and is transmitted through the PUSCH. However, during this process, due to influence of noise, errors may occur in a case of decoding the PUSCH on the network side, and a hybrid automatic repeat request (HARQ) retransmission mechanism needs to be triggered, to ensure correct decoding of the PUSCH. In a case where an error occurs, the network may only decode correct downlink CSI information for downlink transmission after one or more retransmissions. In a case where uplink channel conditions are poor, such as in a case where the signal-to-noise ratio is low, an uplink PUSCH demodulation bit error rate may be very high, multiple retransmissions are required for correct demodulation, which will introduce significant latency, causing that in the downlink channel has already changed by the time the CSI is used for downlink transmission, which in turn results in poor downlink transmission performance.

It should be understood that the AI-based CSI feedback also has the above problems. Due to influence of uplink channel encoding and transmission, the AI-based CSI feedback may also have a problem of multiple retransmissions caused by decoding errors, which may affect downlink transmission performance. How to enhance the CSI feedback performance under noisy channels in actual scenarios is a problem worth studying and urgently needs to be solved.

The technical solutions of the embodiments of the present disclosure are mainly intended to solve the above technical problems.

FIG. 7 is a schematic flowchart of a channel information processing method according to an embodiment of the present disclosure. The method may optionally be applied to the system illustrated in FIG. 1, but it is not limited thereto. The method includes at least part of the following contents.

In step S710, a first terminal device receives a first sample data set transmitted by a first network device; where the first sample data set includes first channel information.

In step S720, the first terminal device processes the first channel information based on a first encoder, to obtain first encoded information; where the first encoded information is used for performing processing related to a transmission parameter set to obtain second encoded information, the second encoded information is used for obtaining second channel information through processing by a first decoder, and the second channel information is used for updating the first encoder and/or the first decoder.

Here, the first sample data set is a training data set for the first encoder and/or the first decoder. Optionally, the first sample data set may include a plurality of pieces of first channel information. In a case where the first sample data set includes the plurality of pieces of first channel information, the first terminal device processes each piece of first channel information separately based on the first encoder, to obtain a plurality of pieces of first encoded information in one-to-one correspondence with the plurality of pieces of first channel information. A plurality of pieces of second encoded information are obtained by performing the processing related to the transmission parameter set on the plurality of pieces of first channel information. Each of the plurality of pieces of second encoded information is separately processed by using the first decoder, to obtain a plurality of pieces of second channel information in one-to-one correspondence with the plurality of pieces of second encoded information. The first encoder and/or the first decoder may be updated by using the plurality of pieces of second channel information. The training of the first encoder and/or the first decoder is completed by updating the first encoder and/or the first decoder multiple times.

Exemplarily, the first channel information may be CSI (i.e., original channel matrix information), or a feature vector used for characterizing the CSI (e.g., a feature vector obtained by performing feature value decomposition on the CSI). Specifically, the first channel information may be CSI reported by the first terminal device or other terminal devices and collected by the first network device, or a feature vector used for characterizing the CSI and collected by the first network device. For example, after obtaining CSI based on measurement of a reference signal, the first terminal device or other terminal devices report the CSI or the feature vector used for characterizing the CSI to a second network device (which may be a core network device or an access network device). The second network device may collect pieces of CSI or feature vectors used for characterizing the pieces of CSI from a plurality of terminal devices and transmit the pieces of CSI or the feature vectors to the first network device for model training. The first network device may obtain a first data set based on the received plurality of pieces of CSI or feature vectors used for characterizing the pieces of CSI, and transmit the first data set to the first terminal device. It will be noted that, an obtaining manner of the first sample data set will not be limited in the embodiments of the present disclosure. In actual applications, the first network device may also collect the first sample data set in other manners.

Similarly, the second channel information may also be CSI or a feature vector used for characterizing the CSI.

In the embodiments of the present disclosure, the first encoder is an encoder in an autoencoder, and the first decoder is a decoder in the autoencoder. The autoencoder is used for CSI feedback and may also be referred to as a CSI feedback model. It can be understood that the first encoder is used for obtaining corresponding encoded information based on input channel information; and the first decoder is used for obtaining corresponding channel information based on input coding information.

Based on this, through the processing of the first encoder and the first decoder, the first channel information may be processed into encoded information and then restored to the second channel information. Here, based on the embodiments of the present disclosure, after processing by the first encoder, the processing related to the transmission parameter set will be performed on the first encoded information output by the first encoder, to obtain second encoded information, and then the second encoded information is processed by the first decoder, to obtain the second channel information.

The above transmission parameter set may include a parameter related to transmission processing, such as parameters related to processing performed by a transceiver on information to be transmitted and air interface transmission. Specifically, after the terminal device obtains the CSI based on the measurement of the reference signal, the CSI or the corresponding feature vector or other information used for feeding back the CSI (e.g., encoded information) needs to be processed through the transceiver and then transmitted to the network device through an air interface channel. In this case, the transmission parameter set may include parameters related to the processing by the transceiver and the air interface transmission.

Optionally, the processing related to the transmission parameter set may include transmitting the first channel information, or locally processing the first channel information based on the transmission parameter set.

Based on the embodiments of the present disclosure, the second channel information is used for updating the first encoder and/or the first decoder. Specifically, a loss may be calculated based on the first channel information and the second channel information, and the first encoder and/or the first decoder may be updated based on the loss. Since intermediate encoded information is processed based on the transmission parameter set during the process from inputting the first channel information to obtaining the second channel information (it can be understood that this process is a forward propagation process of model update), the loss between the second channel information and the first channel information is related to the transmission parameter set, that is, the loss takes into account the non-ideal factors in the transmission processing corresponding to the transmission parameter set. Based on this, the update of the first encoder and/or the first decoder takes into account the impact of the transmission parameter set in a non-ideal transmission processing, which may optimize the performance of the first encoder and/or the first decoder under non-ideal transmission, thereby improving the CSI feedback performance.

It will be noted that the processing related to the transmission parameter set may be performed independently by the first terminal device, or may be performed by the first terminal device in cooperation with the network device. For example, the first terminal device may perform local processing related to the transmission parameter set on the first encoded information, to obtain the second encoded information; alternatively, the first terminal device may perform transmission processing related to the transmission parameter set on the first encoded information, to enable the first network device to receive the second encoded information based on the transmission parameter set. That is, the channel information processing method may further include: performing, by the first terminal device, the processing related to the transmission parameter set on the first encoded information, to enable the first terminal device or the first network device to obtain the second encoded information.

It will be noted that processing the second encoded information based on the first decoder to obtain the second channel information may be performed by the first terminal device or the first network device. Similarly, updating the first encoder and/or the first decoder by using the second channel information may be performed by the first terminal device or the first network device. Exemplarily, the first terminal device may update the first encoder, and the first network device may update the first decoder; alternatively, the first terminal device may update both the first encoder and the first decoder.

That is, in the process of performing the above channel information processing method, the first encoder is deployed in the first terminal device, and the first decoder may be deployed in the first terminal device or the first network device. If the first decoder is deployed in the first terminal device, the first encoder and the first decoder may be updated by the first terminal device. If the first decoder is deployed in the first network device, the first decoder may be updated by the first network device, and the first encoder may be updated by the first terminal device.

In some embodiments, the transmission parameter set includes a parameter related to at least one of channel encoding, symbol mapping, or air interface transmission.

In some embodiments, the transmission parameter set includes at least one of the following pieces of information 1 to 5.

Information 1: a code rate of channel encoding.

Optionally, in the embodiments of the present disclosure, the code rate of the channel encoding may be fixed or variable, that is, the code rate may be the same or different in performing the processing related to the transmission parameter set multiple times during the model update process. In other words, in the above methods of the embodiments of the present disclosure, the processing related to the transmission parameter set may include a channel encoding process based on a fixed code rate or different code rates. Accordingly, the encoder and/or decoder updated based on this process may be applicable to a system that adopts a fixed code rate or different code rates for channel encoding.

Information 2: a channel encoding manner.

Exemplarily, the channel encoding manner may include low density parity check code (LDPC) code or Polar code.

Optionally, the channel encoding manner in the embodiments of the present disclosure may be fixed or variable, that is, the channel encoding manner may be the same or different in performing the processing related to the transmission parameter set multiple times during the model update process. In other words, in the above methods of the embodiments of the present disclosure, the processing related to the transmission parameter set may include a channel encoding process based on a fixed manner or different manners. Accordingly, the encoder and/or decoder updated based on this process may be applicable to a system that adopts a fixed encoding manner or different coding manners for channel encoding.

It can be understood that in the embodiments of the present disclosure, configurations supportable by a channel encoder and a channel decoder include: a) supporting a fixed channel encoder manner and matching a channel encoder with a fixed bit rate $r$; b) supporting a fixed channel encoding manner but matching channel encoders with different bit rates $r$; and c) supporting different channel encoding manners and matching different bit rates r at the same time.

Information 3: a number of bits carried by each symbol in symbol mapping.

Exemplarily, the number of bits carried by each symbol in the symbol mapping may be fixed or variable, that is, the number of bits carried by each symbol in the symbol mapping may be the same or different in performing the processing related to the transmission parameter set multiple times during the model update process. Accordingly, the encoder and/or decoder updated based on this process may be applicable to a situation where the number of bits carried by each symbol in the symbol mapping is the same or different.

Specifically, configurations of the number of bits carried by each symbol may include: a) supporting a fixed modulation manner, e.g., a QPSK modulation manner with m=2 used in the system; and b) supporting multiple different modulation manners, such as supporting QPSK with m=2 and 16QAM with m=4 at the same time.

Information 4: a parameter of channel noise.

Exemplarily, the parameter of the channel noise may be variance of the additive white gaussian noise (AWGN). In order to make the first encoder and/or the first decoder have better generalization for different signal-to-noise ratios, a typical signal-to-noise ratio range of the uplink may be selected during the training process. For example, during training, the minimum signal-to-noise ratio is -5 dB and the maximum signal-to-noise ratio is 5 dB. A signal-to-noise ratio corresponding to each sample during the training process is a random value between the minimum signal-to-noise ratio and the maximum signal-to-noise ratio. By adopting the above noise configuration, the first encoder and/or the first decoder may both operate normally in the typical signal-to-noise ratio range after deployment.

Information 5: an uplink channel response.

Optionally, during the updating process of the first encoder and/or the first decoder, the encoded information may be processed based on an uplink channel response adapted to a wireless channel environment of a cell to which the first terminal device belongs.

It will be noted that the processing performed on the encoded information may be related to one or more of the above pieces of information, for example, related to only the parameter of the channel noise, or related to all of the number of bits carried by each symbol in the symbol mapping, the parameter of the channel noise, and the uplink channel response, which will not be listed one by one here. In practical applications, specific parameters in the transmission parameter set may be set based on input and output information types of the first encoder and/or the first decoder, or the processing manner performed on the encoded information.

In the above method, there are many implementations of the first encoder. Several exemplary implementations will be provided below.

Manner 1: the first encoded information is a first bitstream, the first encoder is used for mapping the first channel information to the first bitstream, and channel encoding and symbol mapping are performed on the first bitstream to obtain a first transmission signal used for carrying the first channel information.

That is, the input information of the first encoder includes channel information, and the output information thereof includes information in a form of bitstream, and the information in the form of bitstream is a first bitstream on which channel encoding and symbol mapping are required to be performed.

Exemplarily, in the embodiments of the present disclosure, the transmission signal refers to a signal in the air interface transmission or a signal transmitted in an actual channel. Specifically, the transmission signal may be a complex vector or a complex signal capable of being transmitted through an antenna.

That is, after the channel encoding and the symbol mapping are performed on the information in the form of bitstream output by the first encoder, the complex vector signal used for transmission in the channel may be obtained, that is, the first encoder is used for completing the same encoding task as a CSI encoder in the AI-based CSI feedback in the related art.

Accordingly, the input information of the first decoder may include information in the form of bitstream, and the output information thereof includes channel information. Specifically, the second encoded information is a third bitstream obtained by performing symbol demapping and channel decoding on a second transmission signal; and the first decoder is used for mapping the third bitstream to the second channel information.

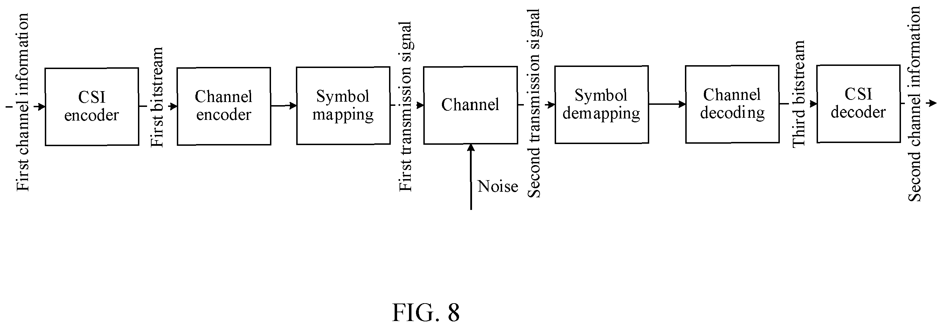

FIG. 8 is a schematic diagram of a signal processing process in this manner. As illustrated in FIG. 8, the first encoder is a CSI encoder, and the first decoder is a CSI decoder. After the CSI encoder maps the first channel information to the first bitstream, a first transmission signal capable of being transmitted in a channel is obtained through channel encoding and symbol mapping. The first transmission signal becomes the second transmission signal after being affected by noise or other factors in the channel. The second transmission signal is processed through symbol demapping and channel decoder, to obtain the third bitstream. The CSI encoder maps the third bitstream to the second channel information.

It will be understood that in this exemplary implementation, the processing related to the transmission parameter set includes the channel encoding, the symbol mapping, the channel transmission (or operations such as noise addition for simulating the channel transmission), the symbol demapping, and the channel decoding. Accordingly, the transmission parameter set may include the code rate of the channel encoding, the channel encoding manner, the number of bits carried by each symbol in the symbol mapping, and the parameter of the channel noise. Optionally, the transmission parameter set may further include the uplink channel response.

Through the above method, a CSI encoder and a CSI decoder model that are adapted to a specific uplink transmission link may be obtained, the performance of CSI feedback under non-ideal channels is improved, and feedback error and feedback delay are reduced.

Manner 2: the first encoded information is a second bitstream, the first encoder is used for mapping the first channel information to the second bitstream, and symbol mapping is performed on the second bitstream, to obtain a first transmission signal used for carrying the first channel information.

That is, the input information of the first encoder includes channel information, and the output information thereof includes information in a form of bitstream.

In this manner, only symbol mapping needs to be performed on the first bitstream, to obtain a first transmission signal capable of being transmitted in a channel. That is, the first encoder may replace the CSI encoder in the AI-based CSI feedback and a channel encoder in the related art. Optionally, the first encoder may be an integrated model or an end-to-end model from the first channel information to the second bitstream.

Accordingly, the input information of the first decoder may include the information in the form of bitstream, and the output information thereof includes the channel information. Specifically, the second encoded information is a fourth bitstream obtained by performing symbol demapping on the second transmission signal; the first decoder is used for mapping the fourth bitstream to the second channel information.

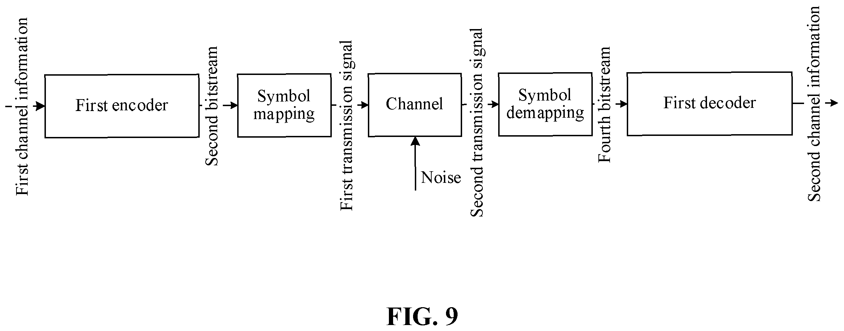

FIG. 9 is a schematic diagram of a signal processing process in this manner. As illustrated in FIG. 9, after the first encoder maps the first channel information to the second bitstream, a first transmission signal capable of being transmitted in the channel is obtained through symbol mapping. The first transmission signal becomes the second transmission signal after passing through the channel. The second transmission signal is processed through symbol demapping, to obtain a fourth bitstream. The CSI encoder maps the fourth bitstream to second channel information.

It can be understood that in this manner, the processing related to the transmission parameter set includes the symbol mapping, the channel transmission (or operations such as noise addition for simulating the channel transmission), and the symbol demapping. Accordingly, the transmission parameter set may include the number of bits carried by each symbol in the symbol mapping and the parameter of channel noise. Optionally, the transmission parameter set may further include the uplink channel response.

In this manner, CSI encoding may be combined with implicit channel encoding, actually combining a source compression process of the CSI encoder and a redundancy addition process of the channel encoding, thereby better improving the CSI feedback performance by using AI.

Manner 3, the first encoded information is a first transmission signal used for carrying the first channel information, and the first encoder is used for mapping the first channel information to the first transmission signal.

That is, the input information of the first encoder includes channel information, and the output information thereof includes a transmission signal in a form of complex vector.

In this manner, the first encoder directly maps the channel information to a signal capable of being transmitted on the antenna. That is, the first encoder may replace the CSI encoder in the AI-based CSI feedback, a channel encoder, and a symbol mapping module in the related art. Optionally, the first encoder may be an integrated model or an end-to-end model from the first channel information to the first transmission signal.

Correspondingly, the second encoded information is a second transmission signal; and the first decoder is used for mapping the second transmission signal to second channel information.

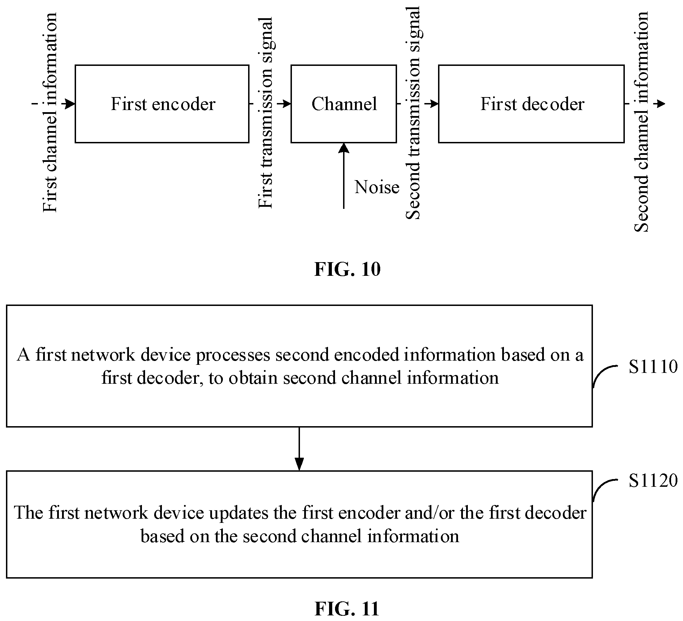

FIG. 10 is a schematic diagram of a signal processing process in this manner. As illustrated in FIG. 10, the first encoder maps the first channel information to the first transmission signal, and the second transmission signal is obtained after the first transmission signal passes through the channel. The second encoder maps the second transmission signal to the second channel information.

It can be understood that in this manner, the processing related to the transmission parameter set includes operations such as the channel transmission or noise addition for simulating the channel transmission. Accordingly, the transmission parameter set may include the parameter of channel noise. Optionally, the transmission parameter set may further include the uplink channel response.

In this manner, CSI encoding may be combined with implicit channel encoding and modulation, actually combining the source compression process of the CSI encoder, the redundancy addition process of the channel encoding, and a symbol mapping process, thereby better combating noise interference caused by non-ideal channels and improving the CSI feedback performance by using AI.

As can be seen from the foregoing description and examples, in some embodiments, the processing related to the transmission parameter set may include: transmitting the first encoded information based on the transmission parameter set.

Optionally, the transmitting the first encoded information based on the transmission parameter set may include transmitting the first encoded information in the channel after performing transmitting and receiving processing thereon, such as the channel encoding and/or the symbol mapping, and accordingly, it may further include performing the symbol demapping and/or the channel decoding on a signal received after the transmission. Alternatively, the transmitting the first encoded information based on the transmission parameter set may include only transmitting in the channel.

In some embodiments, the processing related to the transmission parameter set may include adding noise to the first encoded information or the first transmission signal used for carrying the first encoded information based on the transmission parameter set.

Optionally, the processing related to the transmission parameter set may further include performing transmitting and receiving processing, such as the channel encoding and/or the symbol mapping, on the first encoded information, to obtain the first transmission signal, and performing processing, such as the symbol demapping and/or the channel decoding, on the second transmission signal obtained after adding noise to the first transmission signal.

Specifically, in some embodiments, the above channel information processing method may include: transmitting, by the first terminal device, the first encoded information to the first network device, to enable the first network device to obtain the second encoded information after transmission, and then processing the second encoded information by using the first decoder, to obtain the second channel information; and determining a loss function and gradient information based on the first channel information and the second channel information, and updating, by the first terminal device and the first network device combined in dual-ended, the first encoder and/or decoder based on the gradient information. Specifically, the channel information processing method further includes:

transmitting, by the first terminal device based on the transmission parameter set, the first encoded information or a first transmission signal used for carrying the first encoded information to the first network device; where the first encoded information or the first transmission signal is used by the first network device to obtain first gradient information based on processing by the first decoder;
receiving, by the first terminal device, the first gradient information transmitted by the first network device; and
updating, by the first terminal device, the first encoder based on the first gradient information.

Exemplarily, in the above method, if the first encoder is used for mapping the first channel information to a bitstream, the first terminal device may obtain the first transmission signal after performing the channel encoding and the symbol mapping on the bitstream, and then transmit the first transmission signal to the first network device; and if the first encoder is used for mapping the first channel information to the first transmission signal, that is, the first encoded information is the first transmission signal, the first terminal device may directly transmit the first encoded information to the first network device.

According to the above method, the first encoded information or the first transmission signal is used by the first network device to obtain the first gradient information based on processing by the first decoder. Optionally, the first network device may obtain second encoded information based on the received second transmission signal (e.g., the second transmission signal itself is the second encoded information available for being input to the first decoder, or processing, such as symbol demapping and channel decoding is performed on the second transmission signal to obtain the second encoded information), and the second encoded information is processed by using the first decoder, to obtain second channel information; and a loss function is calculated based on the second channel information and the first channel information, and thus the gradient is calculated based on the loss function. The first network device may update the first decoder based on the gradient information obtained through computation, and transmit the gradient information back to the first terminal device, to enable the first terminal device to update the first encoder.

It can be seen that in the above embodiments, the first terminal device and the first network device perform joint training of an encoder and decoder. Since no transmission of the encoder and decoder over the air interface is required, only by gradient transmission, it is possible to protect the privacy of model implementation details of the terminal-side encoder and the network-side decoder while ensuring the CSI feedback performance.

In some embodiments, updating, by the first terminal device, the first encoder based on the first gradient information may include: obtaining, by the first terminal device, second gradient information based on first gradient information transmitted by each of a plurality of network devices; and updating, by the first terminal device, the first encoder based on the second gradient information.

That is, the above method may support joint training between a single terminal device and the plurality of network devices. That is, each network device may perform training/updating of its own first decoder in parallel and return gradient information to the first terminal device. The first terminal device may merge pieces of gradient information from different network devices, to update a first encoder locally on the first terminal device, so that the first encoder may adapt to decoder configurations of different networks.

In some embodiments, the channel information processing method may further include:

adding, by the first terminal device, noise to the first encoded information or a first transmission signal used for carrying the first encoded information based on the transmission parameter set, to obtain the second encoded information based on a second transmission signal obtained by adding noise; processing, by the first terminal device, the second encoded information based on the first decoder, to obtain the second channel information; and updating, by the first terminal device, the first encoder and the first decoder based on the second channel information, to obtain a second encoder and a second decoder.

Exemplarily, in the above method, if the first encoder is used for mapping the first channel information to a bitstream, the first terminal device may obtain the first transmission signal after performing the channel encoding and the symbol mapping on the bitstream, add noise to the first transmission signal to obtain the second transmission signal, and obtain the second encoded information after performing the symbol demapping and the channel decoding based on the second transmission signal; and if the first encoder is used for mapping the first channel information to the first transmission signal, that is, the first encoded information is the first transmission signal, the first terminal device may directly add noise to the first encoded information to obtain the second transmission signal, that is, the second transmission signal is the second encoded information.

According to the above method, the first terminal device simulates channel transmission by adding noise, to obtain the second encoded information locally, so as to locally update the first encoder and the first decoder to obtain the second encoder and the second decoder.

In some embodiments, the first terminal device may transmit the second decoder to the first network device, to enable the first network device to decode the received CSI feedback information during the actual CSI feedback process by using the second decoder.

In some other embodiments, the channel information processing method further includes:

processing, by the first terminal device, the first channel information based on the second encoder, to obtain third encoded information; processing, by the first terminal device, the third encoded information based on the second decoder, to obtain third channel information; and transmitting, by the first terminal device, a second sample data set to the first network device; where the second sample data set includes the third encoded information and the third channel information, and the second sample data set is used by the first network device to train a third decoder in the first network device.

That is, the first terminal device uses the second encoder and the second decoder that are obtained through updating to perform forward reasoning, to obtain the third encoded information and a decoding result of the third encoded information by the second decoder (third channel information), so as to form the second sample data set, and transmits the second sample data set to the first network device, to enable the first network device to train the third decoder in the first network device by using the second sample data set, so as to enable the performance of the third decoder to be aligned with that of the second decoder. The first network device may decode the received CSI feedback information during the actual CSI feedback process by using the third decoder.

According to the above method, the first terminal device and the first network device perform separate training. By adding the encoder output or decoder input as a data set for transmission, both the terminal and the network are capable of training their respective encoders and decoders based on local implementation, and complete model adaptation. This method does not require model transmission over the air interface, and therefore may protect the privacy of model implementation details of the terminal-side encoder and the network-side decoder; moreover, it also does not require repeated gradient transmission over the air interface, only a one-time data set transmission is required, which may significantly reduce the air interface overhead and latency used for training.

In some embodiments, the channel information processing method may further include an indicating step of the transmission parameter set, that is, an indicating step of an adaptation configuration of the encoder and the decoder. Specifically, the channel information processing method further includes: receiving, by the first terminal device, first indication information transmitted by the first network device; where the first indication information is used to indicate one or more parameters in the transmission parameter set.

Optionally, the above first indication information may be used by the first terminal device to determine a transmission parameter set to be used in the actual CSI feedback, that is, a transmission configuration in a case where the encoder and the decoder are used for providing feedback on the CSI. In other words, the first indication information is used to indicate the adaptation configuration of the encoder and decoder. Through the above adaptation configuration, the transmission parameter set used in the actual deployment of the model may be adapted to the transmission parameter set used during the training process, thereby improving the CSI feedback performance.

In some embodiments, the first indication information includes modulation and coding scheme (MCS) index information and/or modulation order information.

Specifically, the implementation of the first indication information includes one of the following methods.

In manner A, the first indication information is used to indicate an MCS index.

In some embodiments, the MCS index information includes an MCS index set and/or a maximum value of an MCS index.

Exemplarily, the first network device indicates, through the MCS index set (MCS-index-set), a plurality of MCSs adapted to the actually applied CSI feedback model (including the encoder and the decoder) to the first terminal device, that is, the MCS-index-set is a set of the plurality of MCSs.

Exemplarily, the first network device indicates, through the maximum value of the MCS index, the maximum MCS index adapted to the actually applied CSI feedback model to the first terminal device, that is, other configurations lower than that MCS index are adapted to the CSI model. In this way, signaling overhead may be reduced.

Optionally, the MCS index may further include the minimum value and the maximum value of the MCS index, to indicate an MCS index range adapted to the actually applied CSI feedback model, that is, each MCS whose index is located between the minimum value and the maximum value of the MCS index may be adapted to the actually applied CSI feedback model.

In manner B, the first indication information is used to indicate a modulation order.

The MCS index information includes modulation order information (i.e., a modulation order corresponding to an MCS index, and other modulating and encoding information). Therefore, for a model that adapts to all channel encoders $g_r$, it may be possible to indicate only a modulation order or modulation order set that the CSI feedback model is adaptable to.

In manner C, the first indication information is used to indicate an MCS index and a modulation order.

The manner C, which is equivalent to combining the above manners A and B, simultaneously indicates the maximum MCS index and the modulation order/modulation order set that the model is adaptable to. That is, the model is adaptable to any configuration that meets the modulation order limit and is lower than the MCS index.

Optionally, the first indication information may be carried by radio resource control (RRC) signaling, a medium access control control element (MAC CE), or downlink control information (DCI), and may also be carried by other dedicated signaling.

FIG. 11 is a schematic flowchart of a channel information processing method according to another embodiment of the present disclosure. This method may optionally be applied to the system illustrated in FIG. 1, but it is not limited thereto. The method includes at least part of the following contents.

In step S1110, a first network device processes second encoded information based on a first decoder, to obtain second channel information; where the second encoded information is obtained by performing processing related to a transmission parameter set on first encoded information, and the first encoded information is obtained by processing first channel information based on a first encoder.

In step S1120, the first network device updates the first encoder and/or the first decoder based on the second channel information.

In the above method, the second encoded information may be obtained by transmitting the first encoded information through the terminal device, or it may be obtained by performing the processing related to the transmission parameter set on the first encoded information after the first network device obtains the first encoded information based on the first encoder deployed in the first network device.

Similar to the above embodiments, the first channel information in the above method may be CSI (i.e., original channel matrix information), or a feature vector used for characterizing the CSI (e.g., a feature vector obtained by performing feature value decomposition on the CSI). Similarly, the second channel information may also be CSI or a feature vector used for characterizing the CSI.

In addition, the first encoder is an encoder in an autoencoder, and the first decoder is a decoder in an autoencoder. The first encoder is used for obtaining corresponding encoded information based on input channel information. The first decoder is used for obtaining corresponding channel information based on input coding information.

Optionally, in the above method, the processing related to the transmission parameter set may include transmitting the first channel information, or locally processing the first channel information based on the transmission parameter set.

Specifically, for the first network device, the processing related to the transmission parameter set may include performing receiving processing on the first channel information, which includes receiving a corresponding transmission signal, and optionally further includes performing processing, such as the symbol demapping and the channel decoding, on the received transmission signal. Alternatively, the processing related to the transmission parameter set may include adding noise performed by the first network device to the first channel information or the first transmission signal corresponding to the first channel information.

Optionally, in the above method, updating the first encoder and/or the first decoder based on the second channel information may be performed independently by the first network device or jointly by the first network device and the first terminal device. For example, the first network device may update the first decoder, and the first terminal device may update the first encoder; or the first network device may update the first encoder and the first decoder.

Optionally, the transmission parameter set includes a parameter related to at least one of air interface transmission, symbol demapping, or channel decoding.

Optionally, the transmission parameter set includes at least one of:

a code rate of channel decoding;
a channel decoding manner;
a number of bits carried by each symbol in symbol mapping;
a parameter of channel noise; or
an uplink channel response.

Optionally, the second encoded information is a third bitstream obtained by performing symbol demapping and channel decoding on a second transmission signal; and the first decoder is used for mapping the third bitstream to the second channel information.

Optionally, the second encoded information is a fourth bitstream obtained by performing symbol demapping on the second transmission signal; and the first decoder is used for mapping the fourth bitstream to the second channel information.

Optionally, the second encoded information is a second transmission signal; and the first decoder is used for mapping the second transmission signal to the second channel information.

Optionally, the processing related to the transmission parameter set includes:

transmitting the first encoded information based on the transmission parameter set, or adding noise to the first encoded information or a first transmission signal used for carrying the first encoded information based on the transmission parameter set.

The technical details of the above optional implementations may refer to the corresponding descriptions in the above embodiments, which will not be repeated here.

In some embodiments, before the above step S1110, the channel information processing method may further include:

transmitting, by the first network device, a first sample data set to a first terminal device; where the first sample data set includes the first channel information, and the first channel information is used by the first terminal device to obtain first encoded information based on the first encoder; and
performing, by the first network device, receiving processing on the first encoded information based on the transmission parameter set, to obtain the second encoded information.

That is, in some embodiments, the second encoded information in the first network device may be obtained by the first terminal device encoding the first channel information by using the first encoder and then transmitting it. Optionally, the first terminal device may obtain the first transmission signal transmitted in the channel after performing the channel encoding and the symbol mapping on the first encoded information. After transmission in the channel, the first network device may receive the second transmission signal. Accordingly, performing, by the first network device, the receiving processing on the first encoded information based on the transmission parameter set, may include: receiving, by the first network device, the second transmission signal corresponding to the first encoded information, and performing, by the first network device, the symbol demapping and the channel decoding on the second transmission signal, to obtain the second encoded information.

Based on this embodiment, the first network device may update the first decoder based on the second channel information and the first channel information. For example, the first network device may determine a loss function based on the second channel information and the first channel information, determine second gradient information based on the second loss function, and update the first decoder based on the second gradient information.

In some embodiments, updating, by the first network device, the first encoder and/or the first decoder based on the second channel information includes:

obtaining, by the first network device, second gradient information based on a plurality of pieces of second encoded information respectively corresponding to a plurality of terminal devices; and updating, by the first network device, the first decoder based on the second gradient information.

That is, the above update process may be extended to parallel training between a single network device and a plurality of terminal devices. Specifically, the first network device may obtain first gradient information corresponding to each terminal device based on second encoded information corresponding to each terminal device and the first encoded information, and then merge pieces of first gradient information corresponding to the plurality of terminal devices, to obtain the second gradient information, and then update the first decoder by using the second gradient information.

It will be noted that in the parallel training between the single network device and the plurality of terminal devices, transmission parameter sets adopted by different terminal devices may be the same or different. Therefore, the decoder trained or updated in the above process has a certain degree of generalization for different parameter configurations of different terminal devices.

In some embodiments, the channel information processing method further includes:

transmitting, by the first network device, first gradient information to the first terminal device; where the first gradient information is obtained based on second encoded information corresponding to the first terminal device, and the first gradient information is used by the first terminal device to update the first encoder.

According to the above embodiments, whether it is a one-to-one joint training between a network device and a terminal device, or a parallel training between a single network device and a plurality of terminal devices, the first network device may transmit first gradient information to a single terminal device, where the first gradient information is obtained based on the second encoded information corresponding to the terminal device, and is used for training the first encoder in the terminal device.

The above training process does not require model transmission over the air interface, but only uses gradient transmission, which may protect the privacy of model implementation details of the terminal-side encoder and base station-side decoder while ensuring the CSI feedback performance.

In some embodiments, the channel information processing method further includes:

adding, by the first network device, noise to the first encoded information or a first transmission signal used for carrying the first encoded information based on the transmission parameter set, to obtain the second encoded information based on a second transmission signal obtained by adding noise; processing, by the first network device, the second encoded information based on the first decoder, to obtain the second channel information; and updating, by the first network device, the first encoder and the first decoder based on the second channel information, to obtain a second encoder and a second decoder.

Exemplarily, in the above method, if the first encoder is used for mapping channel information to a bitstream, the first network device may obtain the first transmission signal after performing the channel encoding and the symbol mapping on the bitstream, add noise to the first transmission signal to obtain the second transmission signal, and obtain the second encoded information after performing the symbol demapping and the channel decoding based on the second transmission signal; and if the first encoder is used for mapping the first channel information to the first transmission signal, that is, the first encoded information is the first transmission signal, the first network device may directly add noise to the first encoded information to obtain the second transmission signal, that is, the second transmission signal is the second encoded information.

According to the above method, the first network device simulates channel transmission by adding noise, to obtain the second encoded information locally, so as to locally update the first encoder and the first decoder to obtain the second encoder and the second decoder.

In some embodiments, the channel information processing method further includes: transmitting, by the first network device, a second encoder to the first terminal device. In this method, model training is implemented only on the network side. Therefore, no additional air interface overhead is generated for model training, providing a fast training speed and excellent performance.

In some other embodiments, the channel information processing method further includes:

processing, by the first network device, the first channel information based on the second encoder, to obtain third encoded information; and transmitting, by the first network device, a third sample data set to a first terminal device; where the third sample data set includes the first channel information and the third encoded information, and the third sample data set is used by the first terminal device to train a third encoder in the first terminal device.

That is, the first network device uses the second encoder obtained through updating to perform forward reasoning, to obtain the third encoded information, so as to form the third sample data set based on the first channel information and the third encoded information, and transmits the third sample data set to the first terminal device, to enable the first terminal device to train the third encoder in the first terminal device by using the third sample data, so as to enable the performance of the third encoder to be aligned with that of the second encoder. The first terminal device may decode the received CSI feedback information during the actual CSI feedback process by using the third encoder.

According to the above method, the first terminal device and the first network device perform separate training. By adding the encoder output or decoder input as a data set for transmission, both the terminal and the network are capable of training their respective encoders and decoders based on local implementation, and complete model adaptation. This method does not require model transmission over the air interface, and therefore may also protect the privacy of model implementation details of the terminal-side encoder and the network-side decoder; moreover, it also does not require repeated gradient transmission over the air interface, only a one-time data set transmission is required, which may significantly reduce the air interface overhead and latency used for training.

In some embodiments, the channel information processing method further includes:

transmitting, by the first network device, first indication information to a first terminal device; where the first indication information is used to indicate one or more parameters in the transmission parameter set.

In some embodiments, the first indication information includes MCS index information and/or modulation order information.

In some embodiments, the MCS index information includes an MCS index set and/or a maximum value of an MCS index.

The implementation of the first indication information in the above embodiments may refer to the corresponding description in the above embodiments, which will not be repeated here.

In order to understand the above technical solutions more clearly, the following is provided with several specific application examples taking the network device as a base station as an example to fully demonstrate the model training process involved in the channel information processing method.

Application example 1

In this application example, a CSI feedback scheme for joint explicit uplink channel encoding is designed based on AI. The CSI feedback scheme may be implemented with reference to FIG. 8. Here, the first channel information and the second channel information are generally channel feature vector information or original channel matrix information. In the current research on AI-based CSI feedback enhancement, during training of the CSI encoder and the CSI decoder, it is assumed that a bitstream output by the CSI encoder reaches the decoder without errors. However, in actual deployment, the presence of uplink channel noise may cause errors in bitstream transmission. Therefore, in this application example, during the model training process, the CSI encoder and decoder are jointly trained by considering some non-ideal factors caused by uplink channel encoding and decoding, and noisy channels.

Specifically, taking the first channel information as the channel feature vector as an example, the first channel information is recorded as W, and the second channel information is recorded as $\tilde{W}$. The training of a CSI encoder $f_E(\cdot)$ and a CSI decoder $f_D(\cdot)$ may be represented as follows:

$$\left\{f_E^{opt}, f_D^{opt}\right\} = \underset{f_E, f_D}{\arg\min} \, L(W, \tilde{W} | g_r, m, l, \sigma_n^2, h)$$

Here, $L(\cdot, \cdot)$ is a loss function. For example, in a case where the first channel information is the channel feature vector, cosine similarity may be used as the loss function, or the like. In a case where the first channel information is the original channel matrix, mean square error (MSE) or normalized mean square error (NMSE) may be used as the loss function, or the like. The conditional parameters during the training process are described as follows.

Here, $g_r$ is an implementation of a channel encoder with a code rate of $r$ and a corresponding channel decoder, such as LDPC code, Polar code, or the like; and configurations supportable by the channel encoder and the channel decoder include: a) supporting a fixed channel encoder manner and matching a channel encoder with a fixed bit rate $r$; b) supporting a fixed channel encoding manner but matching channel encoders with different bit rates $r$; and c) supporting different channel encoding manners and matching different bit rates $r$ at the same time.

Here, $m$ is the number of bits carried by each symbol during the symbol mapping process; and configurations of the number of bits carried by each symbol include: a) supporting a fixed modulation manner, for example, a QPSK modulation manner with m=2 used in the systems; and b) supporting multiple different modulation manners, for example, supporting QPSK with m=2 and 16QAM with m=4 at the same time.

Here, $l$ is the length of the bitstream output by the CSI encoder and input by the CSI decoder; and configurations of the bitstream length include: a) supporting one bitstream length; and b) supporting multiple bitstream lengths.

Here, $\sigma_n^2$ is the variance of AWGN noise. In order to make the AI model have better generalization for different signal-to-noise ratios, a typical signal-to-noise ratio range of uplink is generally selected during the training process. For example, during training, the minimum signal-to-noise ratio is -5 dB and the maximum signal-to-noise ratio is 5 dB. A signal-to-noise ratio corresponding to each sample during the training process is a random value between the minimum signal-to-noise ratio and the maximum signal-to-noise ratio. By adopting the above noise configuration, the AI model may operate normally in the typical signal-to-noise ratio range after deployment.

Here, $h$ is a response of the uplink channel. During the training and deployment process, it is generally sufficient for the response to adapt to a wireless channel environment of a cell to which the response belongs. Moreover, during the training process of the model, for the uplink transmission process, the base station side may ignore the error caused by the actual channel estimation, that is, it may be assumed that the uplink channel estimation is an ideal channel estimation, considering only non-ideal factors caused by symbol demodulation errors due to noise. Therefore, the uplink channel may not be used as a conditional parameter during the training process.

Three training and deployment schemes for the CSI encoder $f_E(\cdot)$ and CSI decoder $f_D(\cdot)$ are provided in this application example, which are as follows.

1) Joint training scheme based on gradient propagation.

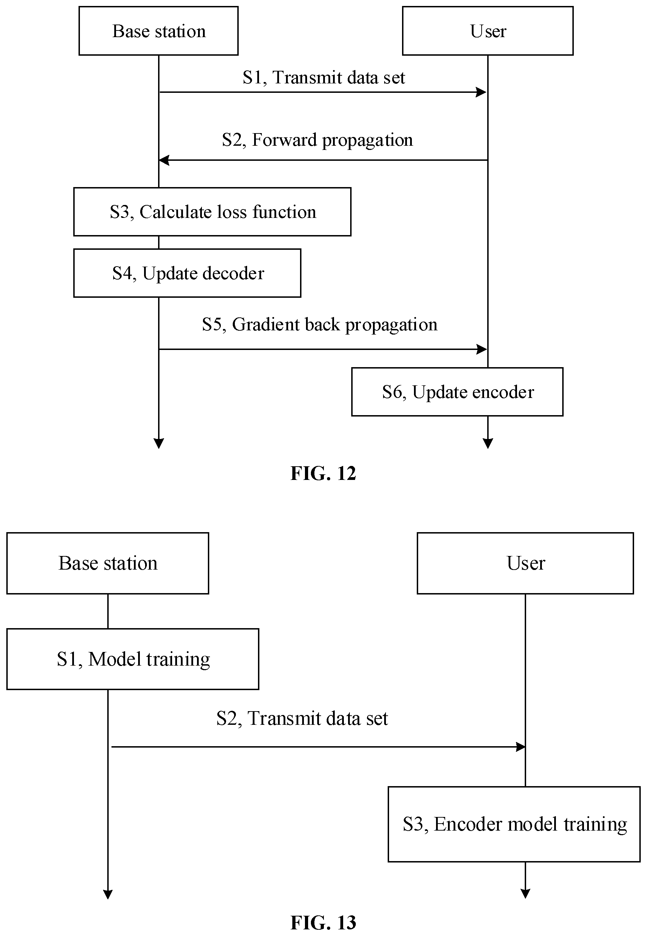

FIG. 12 is a schematic diagram of a joint training scheme based on gradient propagation. As illustrated in FIG. 12, in this scheme, the training and deployment process of the CSI encoder and CSI decoder includes the following steps.

In step S1, a base station transmits a data set (a first sample data set) for training a model to a user device (a terminal device). The data set includes a set of pieces of first channel information arranged in order. Original wireless channel samples included in the first channel information set are cell-specific and obtained by sampling a plurality of users in a cell to which the original wireless channel samples belong to; and it may also be area-specific and corresponding to a specific area (e.g., indoor users but not for outdoor users that may transmit different data sets) within the cell.

In step S2, the user inputs the transmitted first channel information samples into the CSI encoder model in order and performs forward propagation through the uplink channel.

In step S3, the base station receives forward propagation data and, through symbol demapping, channel decoding and the CSI decoder model, obtains second channel information and calculates a loss function.

In step S4, the base station performs gradient back propagation based on the loss function and updates the decoder model.

In step S5, the base station transmits the gradient back propagation to the terminal through an air interface.

In step S6, the terminal updates the encoder model according to the received back gradient propagation.

The above S2 to S6 processes need to be repeated multiple times through iteration, until the preset number of iterations is reached or the loss function meets a threshold condition, thereby completing the training process. Through the joint training based on gradient propagation described in this application example, the terminal side may train and obtain an encoder model, and the base station side may train and obtain a decoder model. Since the non-ideal uplink transmission process is considered during the training process, the CSI encoder and decoder obtained by this scheme may be adaptable to the channel encoding, symbol mapping, channel and noise distribution that are used, thereby improving the CSI feedback performance under non-ideal conditions.

The above process may also be extended to parallel training between a single base station and a plurality of terminals, that is, in the S2 process, the base station receives forward propagation results of the plurality of terminals and obtains respective pieces of second channel information of the plurality of terminals; in S3, a loss function value corresponding to each terminal is calculated, and the gradient back propagation is implemented; it will be noted that in a case of updating the decoder on the base station side in S4, the base station needs to merge the gradient back propagation of the plurality of terminals to update the decoder, to ensure that the decoder is adaptable to the encoders of the plurality of terminals. In S5, the base station respectively transmits the gradient back propagation corresponding to different user terminals to the corresponding terminals. Based on the above process, the parallel training between a single base station and the plurality of terminals may be implemented, and the decoder on the base station side may be adapted to the encoders of different user terminal devices. Furthermore, the uplink transmission parameter sets $\{g_r, m, l, \sigma_n^2, h\}$ used by different terminals may be the same or different, so that the decoder trained by the above process has a certain degree of generalization for different parameter configurations of different terminals.

The above process may also be extended to parallel training between a plurality of base stations and a single terminal, that is, each base station performs the S2 to S4 processes in parallel and performs gradient back propagation independently through the S5 process. The user terminal side needs to merge the back gradient propagation from different base stations, to update the local encoder model, to enable the model to be adaptable to decoder configurations of different base stations.

The above training process does not require model transmission over the air interface, but only uses gradient transmission, which may protect the privacy of model implementation details of the terminal-side encoder and base station-side decoder while ensuring the CSI feedback performance. However, a possible problem is that the above training process requires a plurality of gradient exchanges between the terminal and the base station, which results in longer training delays and more overhead.

2) Separate training scheme based on data set transmission.

FIG. 13 is a first schematic diagram of a separate training scheme based on data set transmission. As illustrated in FIG. 13, in this scheme, the training and deployment process of the CSI encoder and CSI decoder includes the following steps.

In step S1, the base station locally constructs a link as illustrated in FIG. 8, where the CSI encoder and the CSI decoder are both implemented locally on the base station. It will be noted that since there is no uplink wireless channel transmission process in the local implementation on the base station side, the wireless channel process may only consider the impact of AWGN noise, and the transmitted symbol added with noise corresponding to the signal-to-noise ratio may serve as the input of a symbol demapping module.

In step S2, after completing the training of the CSI encoder and CSI decoder, the base station performs forward inference on the first channel information contained in the data set, combines the corresponding CSI encoder output with the first channel information to form a new data set, and transmits the new data set to the user terminal.

In step S3, the terminal trains a local encoder model based on the received data set.

The above process may also be used for a case where a single base station serves a plurality of terminals or a plurality of base stations serve a single terminal: for a single base station serving a plurality of terminals, the S2 process may be performed by the base station transmitting data sets to the plurality of terminals; and for a plurality of base stations serving a single terminal, the terminal receives data sets transmitted by the plurality of base stations in the S2 process, and merges the data sets in S3 for training the encoder model.

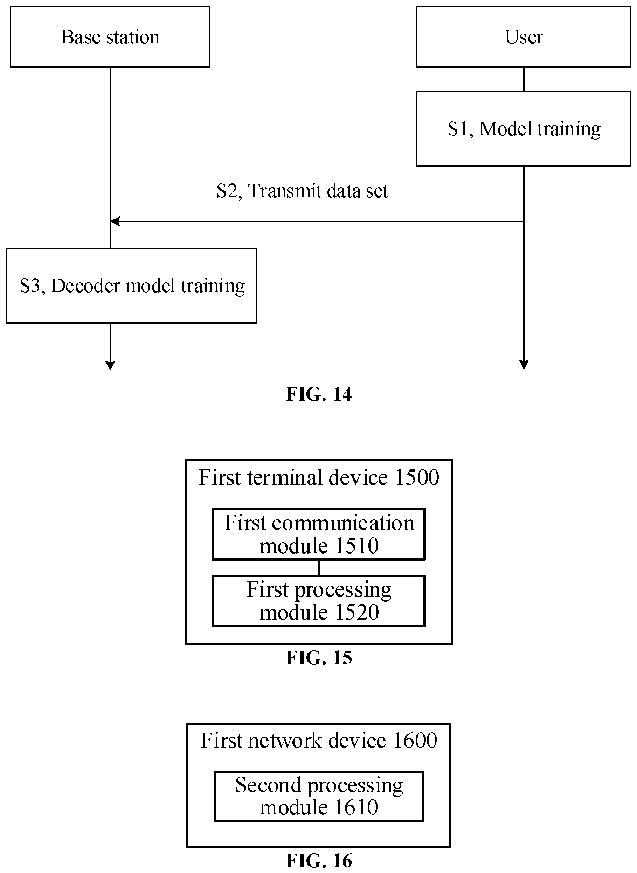

The above separate training scheme based on data set transmission may further adopt a terminal-side priority separate training scheme. FIG. 14 is a second schematic diagram of a separate training scheme based on data set transmission. As illustrated in FIG. 14, in the terminal-side prioritized separate training scheme, the training and deployment process of the CSI encoder and CSI decoder includes the following steps.

In step S1, the terminal side locally constructs a link illustrated in FIG. 8, where the CSI encoder and the CSI decoder are both locally implemented on the terminal side. Similarly, since there is no uplink wireless channel transmission process in the local implementation on the terminal side, the wireless channel process may only consider the impact of AWGN noise, and the transmitted symbol added with noise corresponding to the signal-to-noise ratio may serve as the input of a symbol demapping module.

In step S2, after completing the training of the CSI encoder and CSI decoder, the terminal performs forward inference on the first channel information contained in the data set, combines the corresponding CSI decoder input with the second channel information to form a new data set, and transmits the new data set to the base station.

In step S3, the base station trains a local decoder model based on the received data set.

The above process may also be used for a case where a plurality of base stations serve a single terminal or a single base station serves a plurality of terminals: for a plurality of base stations serving a single terminal, the S2 process may be performed by the terminal transmitting a data set to the plurality of base stations; and for a single base station serving a plurality of terminals, the base station receives data sets transmitted by the plurality of terminals in the S2 process, and merges the data sets in S3 for training the decoder model.

In the above separate training method based on data set transmission, the output of the CSI encoder or the input of the CSI decoder is added as a data set for transmission, to enable the terminal and the base station to train their respective CSI encoders and decoders based on local implementation and complete model adaptation. This training method also does not require model transmission over the air interface, and therefore may also protect the privacy of model implementation details of the terminal-side encoder and the base station-side decoder; moreover, it also does not require repeated gradient transmission over the air interface, only a one-time data set transmission is required, which may significantly reduce the air interface overhead and latency used for training.

3) One-sided training method based on model transmission.

In addition to the two-sided training methods described in 1) and 2) that do not require model transmission over the air interface, this application example further supports the one-sided training method based on model transmission. Specifically, after a user terminal accesses a cell, the network side transmits the locally trained CSI encoder model to the user terminal for use. In this process, model training is only implemented on the network side. Therefore, no additional air interface overhead is generated for model training, providing a fast training speed and excellent performance.

In addition to the model training and deployment methods, this application example further provides an indication method of model adaptation configuration.

Considering that the parameter set $\{g_r, m, l, \sigma_n^2, h\}$ that is related to the uplink transmission link and deployed during the model training process may be incompatible with the parameter set adopted by the user terminal and the network base station side during the actual deployment process, resulting in a decline in model performance, it is necessary to design an indication method of model adaptation configuration. It will be noted that the indication method is only an example of a scheme, and other possible indication methods also fall within the scope of the present invention.

Specifically, since the noise $\sigma_n^2$ during the training process has been set to have a typical signal-to-noise ratio range and the model is applied in the cell, it may be considered that the model has good generalization for the typical wireless channel and noise environment in the cell, and no additional indications for $\sigma_n^2$ and h are required. The overhead of CSI feedback may be determined by the design of the CSI encoder model itself, and no additional indications are required.

For the channel encoder $g_r$ and the modulation order m, the NR protocol has already stipulated that during uplink transmission, the channel encoding manner, the corresponding code rate and the modulation scheme may be determined for the PUCCH and PUSCH through the MCS. Therefore, this application example provides the following several model adaptation configuration indication methods.

1) An MCS index direct indication method. A method is that the network side indicates all MCSs adapted by the model to the user terminal through the MCS-index-set, where the MCS-index-set is a set of all MCS-indexes adapted by the model. However, for example, in NR, for the MCS of the PUSCH, each MCS-index requires 5 bits for indication, and the MCS-index-set includes all possible MCS-indexes, which will result in excessive signaling overhead. Therefore, this application example further proposes that the MCS-index-set may only indicate the maximum MCS-index that the model is adaptable to, and the model may adapt to all configurations lower than the MCS-index; or the MCS-index-set includes the minimum MCS-index and the maximum MCS-index in ascending order, and MCSs included within this range may be all supported.

2) A modulation order indication method. Since the MCS-index includes modulation order information, for a model that adapts to all channel coders $g_r$, only the modulation order or modulation order set that the model is adaptable to may be indicated.

3) A joint indication method of MCS-index and modulation order. 1) and 2) are combined to indicate the maximum MCS-index and the modulation order/modulation order set that the model is adaptable to. The model is adaptable to any configuration that meets modulation order limit and is lower than the MCS-index.

The above indications may be supported by RRC, MAC CE or DCI signaling, or may be indicated by other dedicated signaling.

Through the CSI feedback method of joint explicit uplink channel encoding in this application example, a CSI encoder and CSI decoder model adapted to a specific uplink transmission link may be obtained, the performance of CSI feedback under non-ideal channels is improved, and feedback error and feedback delay are reduced.

Application example 2

The above application example 1 includes an explicit uplink channel encoding module. A method to further improve the CSI feedback performance is to jointly design CSI feedback and uplink channel encoding through AI, which may be implemented with reference to FIG. 9.

Here, the first channel information is used as the input of the first encoder, and the second channel information is used as the output of the first decoder. That is, the first encoder simultaneously accomplishes the work of CSI encoding and channel encoding, and the first decoder simultaneously accomplishes the work of CSI decoding and channel decoding. In the above uplink transmission link, there are no explicit channel encoding and channel decoding modules, and corresponding functions are implicitly completed through the AI-designed encoder and decoder. In a case where in the application example 1, the output bitstream length of the CSI encoder is $l$, the channel encoder code rate is $r$, and the bitstream length after channel encoding is $l_2 = l/r$, in the application example 2, the output bitstream length of the first encoder is $l_2$, the input of the first decoder is the log-likelihood ratio value on each bitstream, and the length is also $l_2$.

Specifically, taking the first channel information as a channel feature vector as an example, the first channel information is recorded as W, and the second channel information is recorded as $\widetilde{W}$. The training of the encoder $f_E(\cdot)$ and decoder $f_D(\cdot)$ may be represented as follows:

$$\{f_E^{opt}, f_D^{opt}\} = \underset{f_E, f_D}{\arg\min}\, L(W, \widetilde{W}|m, l_2, \sigma_n^2, h)$$

The above formula no longer includes a parameter related to the channel encoder (i.e., $g_r$) as in application example 1. The training process is like that in the application example 1 and may support the three training modes, which will not be repeated here.

For the indication method of model adaptation, it is sufficient to use the modulation order indication method in the application example 1 to indicate the modulation order, which will not be repeated here.

The application example 2 may combine CSI encoding with implicit channel encoding, which actually combines the source compression process of the CSI encoder with the redundancy addition process of the channel encoding, thereby better utilizing AI to improve the CSI feedback performance.

Application example 3

Furthermore, based on the application example 2, the CSI feedback of joint implicit symbol mapping is provided in the application example 3, which may be implemented with reference to FIG. 10.

The first channel information is used as the input of the first encoder, and the second channel information is used as the output of the first decoder. The first encoder simultaneously accomplishes the functions of CSI compression, channel encoding and symbol mapping, and the first decoder simultaneously accomplishes the functions of symbol demapping, channel decoding and CSI decoding. The channel encoding and decoding modules, and the symbol mapping and demapping modules that are not shown in the above link are all implicitly implemented in the encoder and decoder through AI. In a case where the output bitstream length of the CSI encoder in the application example 1 is $l$, the channel encoder code rate is $r$, the modulation order is $m$, and the length of the complex vector after symbol mapping is $l_3 = l/rm$, in the application example 3, the output of the first encoder is a complex vector of length $l_3$, and the input of the first decoder is a complex vector of length $l_3$ including noise. It will be noted here that since the first encoder implements the function of the implicit symbol mapping, the output complex vector should also meet certain power constraints, such as constant modulus constraints or average power constraints.

Specifically, taking the first channel information as a channel feature vector as an example, the first channel information is recorded as W, and the second channel information is recorded as $\widetilde{W}$. The training of the encoder $f_E(\cdot)$ and decoder $f_D(\cdot)$ may be represented as follows:

$$\{f_E^{opt}, f_D^{opt}\} = \underset{f_E, f_D}{\arg\min} L(W, \widetilde{W}|l_3, \sigma_n^2, h)$$

The above formula no longer includes parameters related to channel encoding and modulation, containing only an output dimension parameter $l_3$ of the encoder and parameters $\sigma_n^2$ and $h$ related to the channel. The training process is like that in the application example 1 and may support the three training methods, which will not be repeated here.

For the indication method of model adaptation, since it does not include channel encoding and modulation related parameters, additional indication of the model adaptation parameter is not required in this application example.

In the application example 3, the CSI encoding may be combined with the implicit channel encoding and modulation, actually combining the source compression process of the CSI encoder with the redundancy addition process of the channel encoding and a symbol mapping process, thereby better combating noise interference caused by non-ideal channels and improving the CSI feedback performance by using AI.

It can be seen that in the embodiments of the present disclosure, explicit or implicit uplink channel encoding modulation may be combined with the CSI compression feedback process, to combine the lossy source coding process of CSI compression with the redundancy addition process of channel encoding, so as to further optimize the performance of the CSI encoder and CSI decoder in combating noise under non-ideal channels, reduce the retransmission delay and overhead caused by uplink transmission decoding errors, and then significantly improve the CSI feedback performance.

In some embodiments, through dual-ended joint training based on gradient or data set transmission or through single-ended training based on model transmission, the network and base station sides may efficiently obtain the CSI encoder and CSI decoder adapted to the uplink transmission parameter set, thereby realizing AI-based CSI feedback and joint uplink transmission.

In some embodiments, the MCS index or modulation order is used to indicate the channel encoder and/or modulation order adapted to the model, so that the network and the terminal may select an uplink transmission parameter that matches the model, ensuring the performance of CSI feedback.

FIG. 15 is a schematic block diagram of a first terminal device 1500 according to an embodiment of the present disclosure. The first terminal device 1500 may include:

  a first communication module 1510, configured to receive a first sample data set transmitted by a first network device; where the first sample data set includes first channel information; and
  a first processing module 1520, configured to process the first channel information based on a first encoder, to obtain first encoded information; where the first encoded information is used for performing processing related to a transmission parameter set to obtain second encoded information, the second encoded information is used for obtaining second channel information through processing by a first decoder, and the second channel information is used for updating the first encoder and/or the first decoder.

In an implementation, the transmission parameter set includes a parameter related to at least one of channel encoding, symbol mapping or air interface transmission.

In an implementation, the transmission parameter set includes at least one of:

  a code rate of channel encoding;
  a channel encoding manner;
  a number of bits carried by each symbol in symbol mapping;
  a parameter of channel noise; or

an uplink channel response.

In an implementation, the first encoded information is a first bitstream, the first encoder is used for mapping the first channel information to the first bitstream, and channel encoding and symbol mapping are performed on the first bitstream to obtain a first transmission signal used for carrying the first channel information.

In an implementation, the first encoded information is a second bitstream, the first encoder is used for mapping the first channel information to the second bitstream, and symbol mapping is performed on the second bitstream to obtain a first transmission signal used for carrying the first channel information.

In an implementation, the first encoded information is a first transmission signal used for carrying the first channel information, and the first encoder is used for mapping the first channel information to the first transmission signal.

In an implementation, the processing related to the transmission parameter set includes:
transmitting the first encoded information based on the transmission parameter set, or adding noise to the first encoded information or a first transmission signal used for carrying the first encoded information based on the transmission parameter set.

In an implementation, the first communication module 1510 is further configured to transmit, based on the transmission parameter set, the first encoded information or a first transmission signal used for carrying the first encoded information to the first network device; where the first encoded information or the first transmission signal is used by the first network device to obtain first gradient information based on processing by the first decoder;

the first communication module 1510 is further configured to receive the first gradient information transmitted by the first network device; and
the first processing module 1520 is further configured to update the first encoder based on the first gradient information.

In an implementation, the first communication module 1510 is further configured to obtain second gradient information based on first gradient information transmitted by each of a plurality of network devices; and
the first processing module 1520 is further configured to update the first encoder based on the second gradient information.

In an implementation, the first processing module 1520 is further configured to:

add noise to the first encoded information or a first transmission signal used for carrying the first encoded information based on the transmission parameter set, to obtain the second encoded information based on the first transmission signal obtained by adding noise;
process the second encoded information based on the first decoder, to obtain the second channel information; and
update the first encoder and the first decoder based on the second channel information, to obtain a second encoder and a second decoder.

In an implementation, the first processing module 1520 is further configured to process the first channel information based on the second encoder, to obtain third encoded information;

the first processing module 1520 is further configured to process the third encoded information based on the second decoder, to obtain third channel information; and
the first communication module 1510 is further configured to transmit a second sample data set to the first network device; where the second sample data set includes the third encoded information and the third channel information, and the second sample data set is used by the first network device to train a third decoder in the first network device.

In an implementation, the first communication module 1510 is further configured to:
receive first indication information transmitted by the first network device; where the first indication information is used to indicate one or more parameters in the transmission parameter set.

In an implementation, the first indication information includes MCS index information and/or modulation order information.

In an implementation, the MCS index information includes the MCS index information includes an MCS index set and/or a maximum value of an MCS index.

The first terminal device 1500 in the embodiments of the present disclosure may implement the corresponding functions of the first terminal device in the above method embodiments. The processes, functions, implementation methods and beneficial effects corresponding to various modules (sub-modules, units, components, or the like) in the first terminal device 1500 may be found in the corresponding description in the above method embodiments, which will not be repeated here. It will be noted that the functions described in the various modules (sub-modules, units, components, or the like) in the first terminal device 1500 in the embodiments of the present disclosure may be implemented by different modules (sub-modules, units, components, or the like) or by the same module (sub-module, unit, component, or the like).

FIG. 16 is a schematic block diagram of a first network device 1600 according to an embodiment of the present disclosure. The first network device 1600 may include:

a second processing module 1610, configured to process second encoded information based on a first decoder, to obtain second channel information; where the second encoded information is obtained by performing processing related to a transmission parameter set on first encoded information, and the first encoded information is obtained by processing first channel information based on a first encoder; where the second processing module 1610 is further configured to update the first encoder and/or the first decoder based on the second channel information.

In an implementation, the transmission parameter set includes a parameter related to at least one of air interface transmission, symbol demapping, or channel decoding.

In an implementation, the transmission parameter set includes at least one of the following: a code rate of channel decoding; a channel decoding manner; a number of bits carried by each symbol in symbol mapping; a parameter of channel noise; or an uplink channel response.

In an implementation, the second encoded information is a third bitstream obtained by performing symbol demapping and channel decoding on a second transmission signal received by the first network device; and the first decoder is used for mapping the third bitstream to the second channel information.

In an implementation, the second encoded information is a fourth bitstream obtained by performing symbol demapping on a second transmission signal; and the first decoder is used for mapping the fourth bitstream to the second channel information.

In an implementation, the second encoded information is a second transmission signal; and the first decoder is used for mapping the second transmission signal to the second channel information.

In an implementation, the processing related to the transmission parameter set includes:
transmitting the first encoded information based on the transmission parameter set, or adding noise to the first encoded information or a first transmission signal used for carrying the first encoded information based on the transmission parameter set.

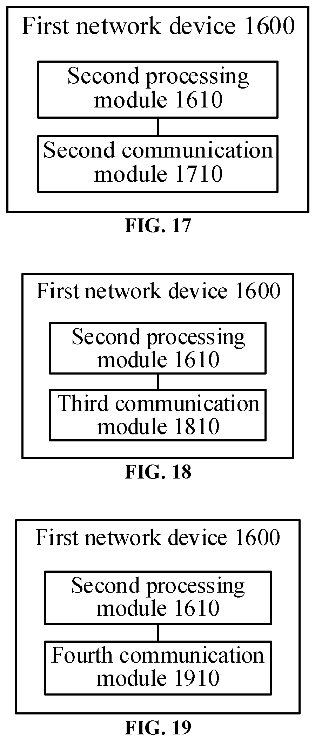

In an implementation, as illustrated in FIG. 17, the first network device 1600 further includes a second communication module 1710, and the second communication module 1710 is configured to:

transmit a first sample data set to a first terminal device; where the first sample data set includes the first channel information, and the first channel information is used by the first terminal device to obtain first encoded information based on the first encode; and
perform receiving processing on the first encoded information based on the transmission parameter set, to obtain the second encoded information.

In an implementation, the second processing module 1610 is further configured to:

obtain second gradient information based on a plurality of pieces of second encoded information respectively corresponding to a plurality of terminal devices; and
update the first decoder based on the second gradient information.

In an implementation, the second communication module 1710 is further configured to:
transmit first gradient information to the first terminal device; where the first gradient information is obtained based on second encoded information corresponding to the first terminal device, and the first gradient information is used by the first terminal device to update the first encoder.

In an implementation, the second processing module 1610 is further configured to:

add noise to the first encoded information or a first transmission signal used for carrying the first encoded information based on the transmission parameter set, to obtain the second encoded information based on a second transmission signal obtained by adding noise;
process the second encoded information based on the first decoder, to obtain the second channel information; and
update the first encoder and the first decoder based on the second channel information, to obtain a second encoder and a second decoder.

In an implementation, the second processing module 1610 is further configured to process the first channel information based on the second encoder to obtain third encoded information. Accordingly, as illustrated in FIG. 18, the first network device 1600 further includes a third communication module 1810, which is configured to transmit a third sample data set to a first terminal device; where the third sample data set includes the first channel information and the third encoded information, and the third sample data set is used by the first terminal device to train a third encoder in the first terminal device.

In an implementation, as illustrated in FIG. 18, the first network device 1600 further includes a third communication module 1810, and the third communication module 1810 is configured to:
transmit the second encoder to a first terminal device.

In an implementation, as illustrated in FIG. 19, the first network device 1600 further includes a fourth communication module 1910, which is configured to:
transmit first indication information to a first terminal device; where the first indication information is used to indicate one or more parameters in the transmission parameter set.

In an implementation, the first indication information includes MCS index information and/or modulation order information.

In an implementation, the MCS index information includes an MCS index set and/or a maximum value of an MCS index.

The first network device 1600 in the embodiments of the present disclosure may implement the corresponding functions of the first network device in the above method embodiments. The processes, functions, implementation methods and beneficial effects corresponding to various modules (sub-modules, units, components, or the like) in the first network device 1600 may be found in the corresponding description in the above method embodiments, which will not be repeated here. It will be noted that the functions described in the various modules (sub-modules, units, components, or the like) in the first network device 1600 in the embodiments of the present disclosure may be implemented by different modules (sub-modules, units, components, or the like) or by the same module (sub-module, unit, component, or the like).

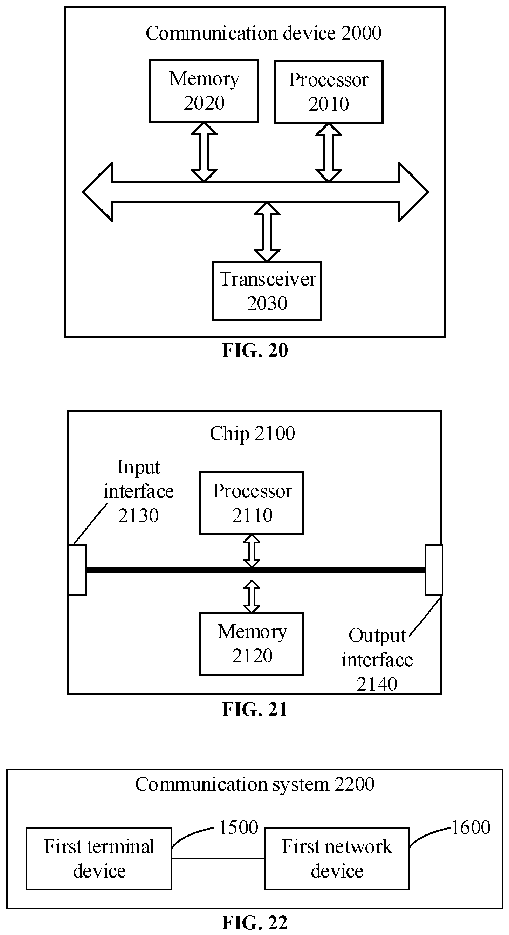

FIG. 20 is a schematic structural diagram of a communication device 2000 according to the embodiments of the present disclosure. The communication device 2000 includes a processor 2010. The processor 2010 may call a computer program from a memory and execute the computer program, to enable the communication device 2000 to implement the methods in the embodiments of the present disclosure.

In an implementation, the communication device 2000 may further include a memory 2020. The processor 2010 may call a computer program from the memory 2020 and execute the computer program, to enable the communication device 2000 to implement the methods in the embodiments of the present disclosure.

Here, the memory 2020 may be a separate device independent of the processor 2010, or may be integrated into the processor 2010.

In an implementation, the communication device 2000 may further include a transceiver 2030. The processor 2010 may control the transceiver 2030 to communicate with other devices, and specifically, may control the transceiver 2030 to transmit information or data to other devices, or receive information or data transmitted by other devices.

Here, the transceiver 2030 may include a transmitter and a receiver. The transceiver 2030 may further include antenna(s), and the number of the antennas may be one or more.

In an implementation, the communication device 2000 may be the first terminal device in the embodiments of the present disclosure, and the communication device 2000 may implement the corresponding processes implemented by the first terminal device in each method in the embodiments of the present disclosure, which will not be repeated here for the sake of brevity.

In an implementation, the communication device 2000 may be the first network device in the embodiments of the present disclosure, and the communication device 2000 may implement the corresponding processes implemented by the first network device in each method in the embodiments of the present disclosure, which will not be repeated here for the sake of brevity.

FIG. 21 is a schematic structural diagram of a chip 2100 according to the embodiments of the present disclosure. The chip 2100 includes a processor 2110. The processor 2110 may call a computer program from a memory and execute the computer program, to implement the methods in the embodiments of the present disclosure.

In an implementation, the chip 2100 may further include a memory 2120. The processor 2110 may call a computer program from the memory 2120 and execute the computer program, to implement the methods performed by the terminal device or the network device in the embodiments of the present disclosure.

The memory 2120 may be a separate device independent of the processor 2110, or may be integrated into the processor 2110.

In an implementation, the chip 2100 may further include an input interface 2130. The processor 2110 may control the input interface 2130 to communicate with other devices or chips, and specifically, may control the input interface 2130 to obtain information or data transmitted by other devices or chips.

In an implementation, the chip 2100 may further include an output interface 2140. The processor 2110 may control the output interface 2140 to communicate with other devices or chips, and specifically, may control the output interface 2140 to output information or data to other devices or chips.

In an implementation, the chip may be applied to the first terminal device in the embodiments of the present disclosure, and the chip may implement the corresponding processes implemented by the first terminal device in each method in the embodiments of the present disclosure, which will not be repeated here for the sake of brevity.

In an implementation, the chip may be applied to the first network device in the embodiments of the present disclosure, and the chip may implement the corresponding processes implemented by the first network device in each method in the embodiments of the present disclosure, which will not be repeated here for the sake of brevity.

The chips applied to the first terminal device and the first network device may be the same chip or different chips.

It should be understood that the chip mentioned in the embodiments of the present disclosure may also be called a system-level chip, a system chip, a chip system, a system-on-chip chip, or the like.

The processor mentioned above may be a general purpose processor, a digital signal processor (DSP), a field programmable gate array (FPGA), an application specific integrated circuit (ASIC) or other programmable logic devices, a transistor logic device, or a discrete hardware component. The general purpose processor mentioned above may be a microprocessor, or any conventional processor.

The above mentioned memory may be a volatile (transitory) memory or a non-volatile (non-transitory) memory, or may include both volatile and non-volatile memories. The non-volatile memory may be a read-only memory (ROM), a programmable ROM (PROM), an erasable PROM (EPROM), an electrically EPROM (EEPROM), or a flash memory. The volatile memory may be a random access memory (RAM).

It should be understood that the above memory is exemplary but not limited illustration. For example, the memory in the embodiments of the present disclosure may be a static RAM (SRAM), a dynamic RAM (DRAM), a synchronous DRAM (SDRAM)), a double data rate SDRAM (DDR SDRAM), an enhanced SDRAM (ESDRAM), a synchronous link DRAM (SLDRAM), or a direct rambus RAM (DR RAM). That is, the memory in the embodiments of the present disclosure is intended to include, but is not limited to, these and any other suitable types of memories.

FIG. 22 is a schematic block diagram of a communication system 2200 according to the embodiments of the present disclosure. The communication system 2200 includes a first terminal device 1500 and a first network device 1600.

In some embodiments, the first terminal device 1500 is configured to receive a first sample data set transmitted by the first network device 1600; where the first sample data set includes first channel information. The first terminal device 1500 is further configured to process the first channel information based on the first encoder, to obtain first encoded information; where the first encoded information is used for performing processing related to a transmission parameter set, to obtain second encoded information, the second encoded information is used for obtaining second channel information through processing by a first decoder, and the second channel information is used for updating the first encoder and/or the first decoder.

In some embodiments, the first network device 1600 is configured to process second encoded information based on a first decoder, to obtain second channel information; where the second encoded information is obtained by performing processing related to a transmission parameter set on first encoded information, and the first encoded information is obtained by processing first channel information based on a first encoder. The first network device 1600 is further configured to update the first encoder and/or the first decoder based on the second channel information.

Here, the first terminal device 1500 may be configured to implement the corresponding functions implemented by the first terminal device in the above methods, and the first network device 1600 may be configured to implement the corresponding functions implemented by the first network device in the above methods, which will not be repeated here for the sake of brevity.

The above embodiments, in whole or in part, may be implemented by software, hardware, firmware, or any combination thereof. When implemented by using software, the above embodiments, in whole or in part, may be implemented in the form of a computer program product. The computer program product includes one or more computer instructions. When the computer program instructions are loaded and performed on a computer, procedures or functions according to the embodiments of the present disclosure are generated in whole or in part. The computer may be a general purpose computer, a special purpose computer, a computer network, or other programmable apparatus. The computer instructions may be stored in a computer-readable storage medium, or transmitted from one computer-readable storage medium to another computer-readable storage medium. For example, the computer instructions may be transmitted from a website, computer, server, or data center to another website, computer, server, or data center in a wired (e.g., coaxial cable, optical fiber, or digital subscriber line (DSL)) or wireless (e.g., infrared, radio, microwave, or the like) manner. The computer-readable storage medium may be any available medium that can be accessed by a computer, or a data storage device such as a server or a data center that includes one or more available media integrated therein. The available medium may be a magnetic medium (e.g., a floppy disk, a hard disk, or a magnetic tape), an optical medium (e.g., a digital video disk (DVD)), a semiconductor medium (e.g., a solid state disk (SSD)), or the like.

It should be understood that in the various embodiments of the present disclosure, the magnitude of the sequence numbers of the aforementioned processes does not mean the order of execution. The order of execution of the aforementioned various processes should be determined by their functions and internal logics, and shall not constitute any limitation on the implementation process of the embodiments of the present disclosure.

Those skilled in the art may clearly understand that for the convenience and brevity of the description, the specific operating processes of the system, apparatus/device and unit described above may refer to the corresponding processes in the aforementioned method embodiments, which will not be repeated here.

The foregoing descriptions are merely specific implementations of the present disclosure, but the protection scope of the present disclosure is not limited thereto. Any skilled person in the art could readily conceive of changes or replacements within the technical scope disclosed in the present disclosure, which shall be all included within the protection scope of the present disclosure. Therefore, the protection scope of the present disclosure shall be on the basis of the protection scope of the claims.

**Claims**

1. A channel information processing method, comprising:

   receiving, by a first terminal device, a first sample data set transmitted by a first network device; wherein the first sample data set comprises first channel information; and
   processing, by the first terminal device, the first channel information based on a first encoder, to obtain first encoded information; wherein the first encoded information is used for performing processing related to a transmission parameter set to obtain second encoded information, the second encoded information is used for obtaining second channel information through processing by a first decoder, and the second channel information is used for updating the first encoder and/or the first decoder.

2. The method according to claim 1, wherein the transmission parameter set comprises a parameter related to at least one of channel encoding, symbol mapping, or air interface transmission.

3. The method according to claim 1 or 2, wherein the transmission parameter set comprises at least one of:

   a code rate of channel encoding;
   a channel encoding manner;
   a number of bits carried by each symbol in symbol mapping;
   a parameter of channel noise; or
   an uplink channel response.

4. The method according to any one of claims 1 to 3, wherein the first encoded information is a first bitstream, the first encoder is used for mapping the first channel information to the first bitstream, and channel encoding and symbol mapping are performed on the first bitstream to obtain a first transmission signal used for carrying the first channel information.

5. The method according to any one of claims 1 to 3, wherein the first encoded information is a second bitstream, the first encoder is used for mapping the first channel information to the second bitstream, and symbol mapping is performed on the second bitstream to obtain a first transmission signal used for carrying the first channel information.

6. The method according to any one of claims 1 to 3, wherein the first encoded information is a first transmission signal used for carrying the first channel information, and the first encoder is used for mapping the first channel information to the first transmission signal.

7. The method according to any one of claims 1 to 6, wherein the processing related to the transmission parameter set comprises:
   transmitting the first encoded information based on the transmission parameter set, or adding noise to the first encoded information or a first transmission signal used for carrying the first encoded information based on the transmission parameter set.

8. The method according to any one of claims 1 to 7, further comprising:

   transmitting, by the first terminal device based on the transmission parameter set, the first encoded information or a first transmission signal used for carrying the first encoded information to the first network device; wherein the first encoded information or the first transmission signal is used by the first network device to obtain first gradient information based on processing by the first decoder;
   receiving, by the first terminal device, the first gradient information transmitted by the first network device; and
   updating, by the first terminal device, the first encoder based on the first gradient information.

9. The method according to claim 8, wherein updating, by the first terminal device, the first encoder based on the first gradient information comprises:

   obtaining, by the first terminal device, second gradient information based on first gradient information transmitted by each of a plurality of network devices; and
   updating, by the first terminal device, the first encoder based on the second gradient information.

10. The method according to any one of claims 1 to 7, further comprising:

    adding, by the first terminal device, noise to the first encoded information or a first transmission signal used for carrying the first encoded information based on the transmission parameter set, to obtain the second encoded information based on a second transmission signal obtained by adding noise;
    processing, by the first terminal device, the second encoded information based on the first decoder, to obtain the second channel information;

and

updating, by the first terminal device, the first encoder and the first decoder based on the second channel information, to obtain a second encoder and a second decoder.

11. The method according to claim 10, further comprising:

processing, by the first terminal device, the first channel information based on the second encoder, to obtain third encoded information; processing, by the first terminal device, the third encoded information based on the second decoder, to obtain third channel information; and transmitting, by the first terminal device, a second sample data set to the first network device; wherein the second sample data set comprises the third encoded information and the third channel information, and the second sample data set is used by the first network device to train a third decoder in the first network device.

12. The method according to any one of claims 1 to 11, further comprising:
receiving, by the first terminal device, first indication information transmitted by the first network device; wherein the first indication information is used to indicate one or more parameters in the transmission parameter set.

13. The method according to claim 12, wherein the first indication information comprises modulation and coding scheme (MCS) index information and/or modulation order information.

14. The method according to claim 13, wherein the MCS index information comprises an MCS index set and/or a maximum value of an MCS index.

15. A channel information processing method, comprising:

processing, by a first network device, second encoded information based on a first decoder, to obtain second channel information; wherein the second encoded information is obtained by performing processing related to a transmission parameter set on first encoded information, and the first encoded information is obtained by processing first channel information based on a first encoder; and updating, by the first network device, the first encoder and/or the first decoder based on the second channel information.

16. The method according to claim 15, wherein the transmission parameter set comprises a parameter related to at least one of air interface transmission, symbol demapping, or channel decoding.

17. The method according to claim 15 or 16, wherein the transmission parameter set comprises at least one of:

a code rate of channel decoding; a channel decoding manner; a number of bits carried by each symbol in symbol mapping; a parameter of channel noise; or an uplink channel response.

18. The method according to any one of claims 15 to 17, wherein the second encoded information is a third bitstream obtained by performing symbol demapping and channel decoding on a second transmission signal; and the first decoder is used for mapping the third bitstream to the second channel information.

19. The method according to any one of claims 15 to 17, wherein the second encoded information is a fourth bitstream obtained by performing symbol demapping on a second transmission signal; and the first decoder is used for mapping the fourth bitstream to the second channel information.

20. The method according to any one of claims 15 to 17, wherein the second encoded information is a second transmission signal; and the first decoder is used for mapping the second transmission signal to the second channel information.

21. The method according to any one of claims 15 to 20, wherein the processing related to the transmission parameter set comprises:
transmitting the first encoded information based on the transmission parameter set, or adding noise to the first encoded information or a first transmission signal used for carrying the first encoded information based on the transmission parameter set.

22. The method according to any one of claims 15 to 21, further comprising:

transmitting, by the first network device, a first sample data set to a first terminal device; wherein the first sample data set comprises the first channel information, and the first channel information is used by the first terminal device to obtain first encoded information based on the first encoder; and performing, by the first network device, receiving processing on the first encoded information based on the transmission parameter set, to obtain the second encoded information.

23. The method according to claim 22, wherein updating, by the first network device, the first encoder and/or the first decoder based on the second channel information comprises:

   obtaining, by the first network device, second gradient information based on a plurality of pieces of second encoded information respectively corresponding to a plurality of terminal devices; and
   updating, by the first network device, the first decoder based on the second gradient information.

24. The method according to claim 22 or 23, further comprising:
   transmitting, by the first network device, first gradient information to the first terminal device; wherein the first gradient information is obtained based on second encoded information corresponding to the first terminal device, and the first gradient information is used by the first terminal device to update the first encoder.

25. The method according to any one of claims 15 to 21, further comprising:

   adding, by the first network device, noise to the first encoded information or a first transmission signal used for carrying the first encoded information based on the transmission parameter set, to obtain the second encoded information based on a second transmission signal obtained by adding noise;
   processing, by the first network device, the second encoded information based on the first decoder, to obtain the second channel information; and
   updating, by the first network device, the first encoder and the first decoder based on the second channel information, to obtain a second encoder and a second decoder.

26. The method according to claim 25, further comprising:

   processing, by the first network device, the first channel information based on the second encoder, to obtain third encoded information; and
   transmitting, by the first network device, a third sample data set to a first terminal device; wherein the third sample data set comprises the first channel information and the third encoded information, and the third sample data set is used by the first terminal device to train a third encoder in the first terminal device.

27. The method according to claim 25, further comprising:

   transmitting, by the first network device, the second encoder to a first terminal device.

28. The method according to any one of claims 15 to 27, further comprising:
   transmitting, by the first network device, first indication information to a first terminal device; wherein the first indication information is used to indicate one or more parameters in the transmission parameter set.

29. The method according to claim 28, wherein the first indication information comprises modulation and coding scheme (MCS) index information and/or modulation order information.

30. The method according to claim 29, wherein the MCS index information comprises an MCS index set and/or a maximum value of an MCS index.

31. A first terminal device, comprising:

   a first communication module, configured to receive a first sample data set transmitted by a first network device; wherein the first sample data set comprises first channel information; and
   a first processing module, configured to process the first channel information based on a first encoder, to obtain first encoded information; wherein the first encoded information is used for performing processing related to a transmission parameter set to obtain second encoded information, the second encoded information is used for obtaining second channel information through processing by a first decoder, and the second channel information is used for updating the first encoder and/or the first decoder.

32. The first terminal device according to claim 31, wherein the transmission parameter set comprises a parameter related to at least one of channel encoding, symbol mapping or air interface transmission.

33. The first terminal device according to claim 31 or 32, wherein the transmission parameter set comprises at least one of:

   a code rate of channel encoding;
   a channel encoding manner;
   a number of bits carried by each symbol in symbol mapping;
   a parameter of channel noise; or
   an uplink channel response.

34. The first terminal device according to any one of claims 31 to 33, wherein the first encoded information is a first bitstream, the first encoder is used for mapping the first channel information to the first bitstream, and channel encoding and symbol mapping are performed on the first bitstream to obtain a first transmission signal used for carrying the first channel information.

35. The first terminal device according to any one of claims 31 to 33, wherein the first encoded information is a second bitstream, the first encoder is used for mapping the first channel information to the second bitstream, and symbol mapping is performed on the second bitstream to obtain a first transmission signal used for carrying the first channel information.

36. The first terminal device according to any one of claims 31 to 33, wherein the first encoded information is a first transmission signal used for carrying the first channel information, and the first encoder is used for mapping the first channel information to the first transmission signal.

37. The first terminal device according to any one of claims 31 to 36, wherein the processing related to the transmission parameter set comprises: transmitting the first encoded information based on the transmission parameter set, or adding noise to the first encoded information or a first transmission signal used for carrying the first encoded information based on the transmission parameter set.

38. The first terminal device according to any one of claims 31 to 37, wherein

the first communication module is further configured to transmit, based on the transmission parameter set, the first encoded information or a first transmission signal used for carrying the first encoded information to the first network device; wherein the first encoded information or the first transmission signal is used by the first network device to obtain first gradient information based on processing by the first decoder;
the first communication module is further configured to receive the first gradient information transmitted by the first network device; and
the first processing module is further configured to update the first encoder based on the first gradient information.

39. The first terminal device according to claim 38, wherein

the first communication module is further configured to obtain second gradient information based on first gradient information transmitted by each of a plurality of network devices; and

the first processing module is further configured to update the first encoder based on the second gradient information.

40. The first terminal device according to any one of claims 31 to 37, wherein the first processing module is further configured to:

add noise to the first encoded information or a first transmission signal used for carrying the first encoded information based on the transmission parameter set, to obtain the second encoded information based on a second transmission signal obtained by adding noise;
process the second encoded information based on the first decoder, to obtain the second channel information; and
update the first encoder and the first decoder based on the second channel information, to obtain a second encoder and a second decoder.

41. The first terminal device according to claim 40, wherein

the first processing module is further configured to process the first channel information based on the second encoder, to obtain third encoded information, and process the third encoded information based on the second decoder, to obtain third channel information; and
the first communication module is further configured to transmit a second sample data set to the first network device; wherein the second sample data set comprises the third encoded information and the third channel information, and the second sample data set is used by the first network device to train a third decoder in the first network device.

42. The first terminal device according to any one of claims 31 to 41, wherein the first communication module is further configured to:
receive first indication information transmitted by the first network device; wherein the first indication information is used to indicate one or more parameters in the transmission parameter set.

43. The first terminal device according to claim 42, wherein the first indication information comprises modulation and coding scheme (MCS) index information and/or modulation order information.

44. The first terminal device according to claim 43, wherein the MCS index information comprises an MCS index set and/or a maximum value of an MCS index.

45. A first network device, comprising:

a second processing module, configured to process second encoded information based on a first decoder, to obtain second channel information; wherein the second encoded information is obtained by performing processing related to a transmission parameter set on first encoded information, and the first encoded information is obtained by processing first channel information based on a first encoder;

wherein the second processing module is further configured to update the first encoder and/or the first decoder based on the second channel information.

46. The first network device according to claim 45, wherein the transmission parameter set comprises a parameter related to at least one of air interface transmission, symbol demapping, or channel decoding.

47. The first network device according to claim 45 or 46, wherein the transmission parameter set comprises at least one of:

a code rate of channel decoding;
a channel decoding manner;
a number of bits carried by each symbol in symbol mapping;
a parameter of channel noise; or
an uplink channel response.

48. The first network device according to any one of claims 45 to 47, wherein the second encoded information is a third bitstream obtained by performing symbol demapping and channel decoding on a second transmission signal; and the first decoder is used for mapping the third bitstream to the second channel information.

49. The first network device according to any one of claims 45 to 47, wherein the second encoded information is a fourth bitstream obtained by performing symbol demapping on a second transmission signal; and the first decoder is used for mapping the fourth bitstream to the second channel information.

50. The first network device according to any one of claims 45 to 47, wherein the second encoded information is a second transmission signal; and the first decoder is used for mapping the second transmission signal to the second channel information.

51. The first network device according to any one of claims 45 to 50, wherein the processing related to the transmission parameter set comprises:
transmitting the first encoded information based on the transmission parameter set, or adding noise to the first encoded information or a first transmission signal used for carrying the first encoded information based on the transmission parameter set.

52. The first network device according to any one of claims 45 to 51, further comprising a second communication module, configured to:

transmit a first sample data set to a first terminal device; wherein the first sample data set comprises the first channel information, and the first channel information is used by the first terminal device to obtain first encoded information based on the first encoder; and
perform receiving processing on the first encoded information based on the transmission parameter set, to obtain the second encoded information.

53. The first network device according to claim 52, wherein the second processing module is further configured to:

obtain second gradient information based on a plurality of pieces of second encoded information respectively corresponding to a plurality of terminal devices; and
update the first decoder based on the second gradient information.

54. The first network device according to claim 52 or 53, wherein the second communication module is further configured to:
transmit first gradient information to the first terminal device; wherein the first gradient information is obtained based on second encoded information corresponding to the first terminal device, and the first gradient information is used by the first terminal device to update the first encoder.

55. The first network device according to any one of claims 45 to 51, wherein the second processing module is further configured to:

add noise to the first encoded information or a first transmission signal used for carrying the first encoded information based on the transmission parameter set, to obtain the second encoded information based on a second transmission signal obtained by adding noise;
process the second encoded information based on the first decoder, to obtain the second channel information; and
update the first encoder and the first decoder based on the second channel information, to obtain a second encoder and a second decoder.

56. The first network device according to claim 55, wherein the second processing module is further configured to process the first channel information based on the second encoder, to obtain third encoded information; and

the first network device further comprises a third communication module, configured to transmit a third sample data set to a first terminal device; wherein the third sample data set comprises the first channel information and the third encoded information, and the third sample data set is used by the first terminal device to train a third encoder in the first terminal device.

57. The first network device according to claim 55, further comprising a third communication module, further configured to:

transmit the second encoder to a first terminal device.

58. The first network device according to any one of claims 45 to 57, further comprising a fourth communication module, configured to:

transmit first indication information to a first terminal device; wherein the first indication information is used to indicate one or more parameters in the transmission parameter set.

59. The first network device according to claim 58, wherein the first indication information comprises modulation and coding scheme (MCS) index information and/or modulation order information.

60. The first network device according to claim 59, wherein the MCS index information comprises an MCS index set and/or a maximum value of an MCS index.

61. A first terminal device, comprising: a transceiver, a processor, and a memory; wherein the memory is configured to store a computer program, the transceiver is configured to communicate with other devices, and the processor is configured to call the computer program stored in the memory and execute the computer program, to enable the first terminal device to perform:

receiving a first sample data set transmitted by a first network device; wherein the first sample data set comprises first channel information; and

performing the first channel information based on a first encoder, to obtain first encoded information; wherein the first encoded information is used for performing processing related to a transmission parameter set to obtain second encoded information, the second encoded information is used for obtaining second channel information through processing by a first decoder, and the second channel information is used for updating the first encoder and/or the first decoder.

62. The first terminal device according to claim 61, wherein the transmission parameter set comprises a parameter related to at least one of channel encoding, symbol mapping, or air interface transmission.

63. The first terminal device according to claim 61 or 62, wherein the transmission parameter set comprises at least one of:

a code rate of channel encoding;
a channel encoding manner;
a number of bits carried by each symbol in symbol mapping;
a parameter of channel noise; or
an uplink channel response.

64. The first terminal device according to any one of claims 61 to 63, wherein the first encoded information is a first bitstream, the first encoder is used for mapping the first channel information to the first bitstream, and channel encoding and symbol mapping are performed on the first bitstream to obtain a first transmission signal used for carrying the first channel information.

65. The first terminal device according to any one of claims 61 to 63, wherein the first encoded information is a second bitstream, the first encoder is used for mapping the first channel information to the second bitstream, and symbol mapping is performed on the second bitstream to obtain a first transmission signal used for carrying the first channel information.

66. The first terminal device according to any one of claims 61 to 63, wherein the first encoded information is a first transmission signal used for carrying the first channel information, and the first encoder is used for mapping the first channel information to the first transmission signal.

67. The first terminal device according to any one of claims 61 to 66, wherein the processor is further configured to enable the first terminal device to perform:

transmitting the first encoded information based on the transmission parameter set, or adding noise to the first encoded information or a first transmission signal used for carrying the first encoded information based on the transmission parameter set.

68. The first terminal device according to any one of claims 61 to 67, wherein the processor is further configured to enable the first terminal device to perform:

transmitting, based on the transmission parameter set, the first encoded information or a first transmission signal used for carrying the first encoded information to the first network device; wherein the first encoded information or the first transmission signal is used by the first network device to obtain first gradient information based on processing by the first decoder; receiving the first gradient information transmitted by the first network device; and updating the first encoder based on the first gradient information.

69. The first terminal device according to claim 68, wherein the processor is further configured to enable the first terminal device to perform:

obtaining second gradient information based on first gradient information transmitted by each of a plurality of network devices; and updating the first encoder based on the second gradient information.

70. The first terminal device according to any one of claims 61 to 67, wherein the processor is further configured to enable the first terminal device to perform:

adding noise to the first encoded information or a first transmission signal used for carrying the first encoded information based on the transmission parameter set, to obtain the second encoded information based on a second transmission signal obtained by adding noise; processing the second encoded information based on the first decoder, to obtain the second channel information; and updating the first encoder and the first decoder based on the second channel information, to obtain a second encoder and a second decoder.

71. The first terminal device according to claim 70, wherein the processor is further configured to enable the first terminal device to perform:

processing the first channel information based on the second encoder, to obtain third encoded information; processing the third encoded information based on the second decoder, to obtain third channel information; and transmitting a second sample data set to the first network device; wherein the second sample data set comprises the third encoded information and the third channel information, and the second sample data set is used by the first network device to train a third decoder in the first network device.

72. The first terminal device according to any one of claims 61 to 71, wherein the processor is further configured to enable the first terminal device to perform: receiving first indication information transmitted by the first network device; wherein the first indication information is used to indicate one or more parameters in the transmission parameter set.

73. The first terminal device according to claim 72, wherein the first indication information comprises modulation and coding scheme (MCS) index information and/or modulation order information.

74. The first terminal device according to claim 73, wherein the MCS index information comprises an MCS index set and/or a maximum value of an MCS index.

75. A first network device, comprising: a transceiver, a processor, and a memory; wherein the memory is configured to store a computer program, the transceiver is configured to communicate with other devices, and the processor is configured to call the computer program stored in the memory and execute the computer program, to enable the first network device to perform:

processing second encoded information based on a first decoder, to obtain second channel information; wherein the second encoded information is obtained by performing processing related to a transmission parameter set on first encoded information, and the first encoded information is obtained by processing first channel information based on a first encoder; and updating the first encoder and/or the first decoder based on the second channel information.

76. The first network device according to claim 75, wherein the transmission parameter set comprises a parameter related to at least one of air interface transmission, symbol demapping, or channel decoding.

77. The first network device according to claim 75 or 76, wherein the transmission parameter set comprises at least one of:

a code rate of channel decoding; a channel decoding manner; a number of bits carried by each symbol in symbol mapping; a parameter of channel noise; or an uplink channel response.

78. The first network device according to any one of claims 75 to 77, wherein the second encoded information is a third bitstream obtained by performing symbol demapping and channel decoding on a second transmission signal; and the first decoder is used for mapping the third bitstream to the second channel information.

79. The first network device according to any one of claims 75 to 77, wherein the second encoded information is a fourth bitstream obtained by performing symbol demapping on a second transmission signal; and the first decoder is used for mapping the fourth bitstream to the second channel information.

80. The first network device according to any one of claims 75 to 77, wherein the second encoded information is a second transmission signal; and the first decoder is used for mapping the second transmission signal to the second channel information.

81. The first network device according to any one of claims 75 to 80, wherein the processor is further configured to enable the first network device to perform:
transmitting the first encoded information based on the transmission parameter set, or adding noise to the first encoded information or a first transmission signal used for carrying the first encoded information based on the transmission parameter set.

82. The first network device according to any one of claims 75 to 81, wherein the processor is further configured to enable the first network device to perform:

transmitting a first sample data set to a first terminal device; wherein the first sample data set comprises the first channel information, and the first channel information is used by the first terminal device to obtain first encoded information based on the first encoder; and
performing receiving processing on the first encoded information based on the transmission parameter set, to obtain the second encoded information.

83. The first network device according to claim 82, wherein the processor is further configured to enable the first network device to perform:

obtaining second gradient information based on a plurality of pieces of second encoded information respectively corresponding to a plurality of terminal devices; and
updating the first decoder based on the second gradient information.

84. The first network device according to claim 82 or 83, wherein the processor is further configured to enable the first network device to perform:
transmitting first gradient information to the first terminal device; wherein the first gradient information is obtained based on second encoded information corresponding to the first terminal device, and the first gradient information is used by the first terminal device to update the first encoder.

85. The first network device according to any one of claims 75 to 81, wherein the processor is further configured to enable the first network device to perform:

adding noise to the first encoded information or a first transmission signal used for carrying the first encoded information based on the transmission parameter set, to obtain the second encoded information based on a second transmission signal obtained by adding noise;
processing the second encoded information based on the first decoder, to obtain the second channel information; and
updating the first encoder and the first decoder based on the second channel information, to obtain a second encoder and a second decoder.

86. The first network device according to claim 85, wherein the processor is further configured to enable the first network device to perform:

processing the first channel information based on the second encoder, to obtain third encoded information; and
transmitting a third sample data set to a first terminal device; wherein the third sample data set comprises the first channel information and the third encoded information, and the third sample data set is used by the first terminal device to train a third encoder in the first terminal device.

87. The first network device according to claim 85, wherein the processor is further configured to enable the first network device to perform:
transmitting the second encoder to a first terminal device.

88. The first network device according to any one of claims 75 to 87, wherein the processor is further configured to enable the first network device to perform:
transmitting first indication information to a first terminal device; wherein the first indication information is used to indicate one or more parameters in the transmission parameter set.

89. The first network device according to claim 88, wherein the first indication information comprises modulation and coding scheme (MCS) index information and/or modulation order information.

90. The first network device according to claim 89, wherein the MCS index information comprises an MCS index set and/or a maximum value of an MCS index.

91. A chip, comprising: a processor, configured to call a computer program from a memory and execute the computer program, to enable a device equipped with the chip to perform the method according to any one of claims 1 to 14.

92. A chip, comprising: a processor, configured to call a computer program from a memory and execute the computer program, to enable a device equipped with the chip to perform the method according to any one of claims 15 to 30.

93. A computer-readable storage medium, configured to store a computer program, wherein the computer program, when executed by a device, enables the device to perform the method according to any one of claims 1 to 14.

94. A computer-readable storage medium, configured to store a computer program, wherein the computer program, when executed by a device, enables the device to perform the method according to any one of claims 15 to 30.

95. A computer program product, comprising computer program instructions, wherein the computer program instructions enable a computer to perform the method of any one of claims 1 to 14.

96. A computer program product, comprising computer program instructions, wherein the computer program instructions enable a computer to perform the method of any one of claims 15 to 30.

97. A computer program, wherein the computer program enables a computer to perform the method of any one of claims 1 to 14.

98. A computer program, wherein the computer program enables a computer to perform the method of any one of claims 15 to 30.

99. A communication system, comprising:

a first terminal device, configured to perform the method according to any one of claims 1 to 14; and
a first network device, configured to perform the method according to any one of claims 15 to 30.

**FIG. 1**

**FIG. 2**

Input layer      Output layer

Hidden layer

**FIG. 3**

Input layer → Convolutional layer → Pooling layer → Convolutional layer → Pooling layer → Fully connected layer → Output layer

FIG. 4

**FIG. 5**

Input → Encoder → Feedback bitstream → Decoder → Output

**FIG. 6**

A first terminal device receives a first sample data set transmitted by a first network device ⟍ S710

The first terminal device processes the first channel information based on a first encoder, to obtain first encoded information ⟍ S720

**FIG. 7**

First channel information

CSI encoder

First bitstream

Channel encoder

Symbol mapping

First transmission signal

Channel ← Noise

Second transmission signal

Symbol demapping

Channel decoding

Third bitstream

CSI decoder

Second channel information

FIG. 8

FIG. 9

First channel information

First encoder

Second bitstream

Symbol mapping

First transmission signal

Channel

Noise

Second transmission signal

Symbol demapping

Fourth bitstream

First decoder

Second channel information

First channel information → First encoder → First transmission signal → Channel → Second transmission signal → First decoder → Second channel information

Noise

**FIG. 10**

A first network device processes second encoded information based on a first decoder, to obtain second channel information — S1110

The first network device updates the first encoder and/or the first decoder based on the second channel information — S1120

**FIG. 11**

```
┌─────────────┐                    ┌─────────────┐
│ Base station│                    │    User     │
└─────────────┘                    └─────────────┘
       │         S1, Transmit data set      │
       │ ─────────────────────────────────> │
       │                                     │
       │         S2, Forward propagation     │
       │ <───────────────────────────────── │
       │                                     │
┌──────────────────────────┐                │
│ S3, Calculate loss function│               │
└──────────────────────────┘                │
┌──────────────────────────┐                │
│ S4, Update decoder        │               │
└──────────────────────────┘                │
       │    S5, Gradient back propagation    │
       │ ─────────────────────────────────> │
       │                          ┌──────────────────────┐
       │                          │ S6, Update encoder   │
       │                          └──────────────────────┘
       ▼                                     ▼
```

**FIG. 12**

```
┌─────────────┐                    ┌─────────────┐
│ Base station│                    │    User     │
└─────────────┘                    └─────────────┘
       │                                     │
┌──────────────────────────┐                │
│ S1, Model training        │               │
└──────────────────────────┘                │
       │        S2, Transmit data set        │
       │ ─────────────────────────────────> │
       │                          ┌──────────────────────────┐
       │                          │ S3, Encoder model training│
       │                          └──────────────────────────┘
       ▼                                     ▼
```

**FIG. 13**

FIG. 14

FIG. 15

FIG. 16

First network device 1600

Second processing
module 1610

Second communication
module 1710

**FIG. 17**

First network device 1600

Second processing
module 1610

Third communication
module 1810

**FIG. 18**

First network device 1600

Second processing
module 1610

Fourth communication
module 1910

**FIG. 19**

Communication device 2000

Memory 2020

Processor 2010

Transceiver 2030

**FIG. 20**

Chip 2100

Input interface 2130

Processor 2110

Memory 2120

Output interface 2140

**FIG. 21**

Communication system 2200

First terminal device

1500

First network device

1600

**FIG. 22**

## INTERNATIONAL SEARCH REPORT

International application No.

**PCT/CN2023/113901**

### A. CLASSIFICATION OF SUBJECT MATTER

H04L 1/00(2006.01)i

According to International Patent Classification (IPC) or to both national classification and IPC

### B. FIELDS SEARCHED

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CJFD; CNTXT; CNKI; VEN; ENTXT; ENTXTC; 3GPP; IEEE: 样本数据, 训练数据, 信道信息, 信道状态信息, CSI, 编码, 参数, 更新, 加噪, 解码, sample data, training data, channel state information, cod+, encod+, parameter, update, noise, decod+

### C. DOCUMENTS CONSIDERED TO BE RELEVANT

| Category* | Citation of document, with indication, where appropriate, of the relevant passages | Relevant to claim No. |
|---|---|---|
| X | US 2021273707 A1 (QUALCOMM INC.) 02 September 2021 (2021-09-02) description, paragraphs 0050-0100, and claims 1-25 | 1-99 |
| X | WO 2023028948 A1 (GUANGDONG OPPO MOBILE COMMUNICATIONS CO., LTD.) 09 March 2023 (2023-03-09) description, page 1, line 19 to page 2, line 21 | 1-99 |
| A | WO 2023082154 A1 (GUANGDONG OPPO MOBILE COMMUNICATIONS CO., LTD.) 19 May 2023 (2023-05-19) entire document | 1-99 |
| A | WO 2023015499 A1 (GUANGDONG OPPO MOBILE COMMUNICATIONS CO., LTD.) 16 February 2023 (2023-02-16) entire document | 1-99 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **21 November 2023** | **22 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/113901**

| Patent document cited in search report | | | Publication date (day/month/year) | Patent family member(s) | | | Publication date (day/month/year) |
|---|---|---|---|---|---|---|---|
| US | 2021273707 | A1 | 02 September 2021 | WO | 2021173331 | A1 | 02 September 2021 |
| | | | | EP | 4111599 | A1 | 04 January 2023 |
| WO | 2023028948 | A1 | 09 March 2023 | None | | | |
| WO | 2023082154 | A1 | 19 May 2023 | None | | | |
| WO | 2023015499 | A1 | 16 February 2023 | None | | | |

Form PCT/ISA/210 (patent family annex) (July 2022)